(19)

Europäisches
Patentamt

European
Patent Office

Office européen
des brevets

(11)  **EP 1 924 966 B1**

(12) **EUROPEAN PATENT SPECIFICATION**

(45) Date of publication and mention
of the grant of the patent:
**29.04.2009 Bulletin 2009/18**

(51) Int Cl.:
***G06T 5/50*** *(2006.01)*      ***H04N 5/235*** *(2006.01)*

(21) Application number: **06795615.1**

(22) Date of filing: **08.08.2006**

(86) International application number:
**PCT/IB2006/052735**

(87) International publication number:
**WO 2007/017835 (15.02.2007 Gazette 2007/07)**

(54) **ADAPTIVE EXPOSURE CONTROL**

ADAPTIVE BELICHTUNGSSTEUERUNG

CONTROLE ADAPTATIF DE L'EXPOSITION

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **08.08.2005 US 706223 P**

(43) Date of publication of application:
**28.05.2008 Bulletin 2008/22**

(73) Proprietor: **MEP Imaging Technologies Ltd.
73142 Shoham (IL)**

(72) Inventor: **Rubner, Joseph
Shoham 73142 (IL)**

(74) Representative: **Evens, Paul Jonathan et al
Maguire Boss
24 East Street
St. Ives
Cambridgeshire PE27 5PD (GB)**

(56) References cited:
**EP-A- 1 418 544         US-A1- 2002 154 829
US-A1- 2002 176 010      US-A1- 2003 103 158
US-A1- 2004 136 603      US-B1- 6 778 210
US-B1- 6 856 708**

## Description

### FIELD OF THE INVENTION

The present invention relates in general to methods and apparatuses related to photography. In particular, methods and apparatuses for adaptive exposure control in multiple exposure photography ("MEP") are described.

### BACKGROUND OF THE INVENTION

Typically, the Human Vision System ("HVS") performs better than a camera in various respects (of course, some cameras are better and some worse than others, on all or some planes). For example, typically, the HVS, compared to a camera, can: see better in bright light and in low light; accommodate a broader dynamic range in a scene (*i.e.* range of darkness to brightness); see colors better (a broader range of colors, and greater saturation range of color); accommodate greater depth of field in a scene (*i.e.* bring differently-distanced things into focus simultaneously); provide a sharper, blur-free picture; discern more detail (*i.e.* higher resolution); and, better ignore undesired momentary details (such as an inadvertent blink of a subject's eye).

Conversely, some cameras outperform the HVS in various respects, due to special features added to them. For example, cameras with suitable capabilities can see farther away, thanks to "zoom" capabilities and acquire pictures in very low light conditions, thanks to "flash".

Over the decades, great efforts have been expended towards improvements to cameras. For digital photography, efforts have focused mainly on light-sensor technology (*e.g.* CMOS, CCD), picture compression technology, memory technology, development of digital-based features (such as "digital zoom"), enhancing ease-of-use (through automation) and providing ancillary services (such as digital picture communication, storage and management).

Efforts towards picture quality improvement have also been made in the field of image processing (*i.e.* manipulating the picture per various algorithms to achieve a different result that is "better" in some sense). Due to the high requirements (in terms of processing power, memory, throughput, ancillary software and tools) necessary to implement image processing methods, these improvements have overwhelmingly been implemented "offline" after the acquisition process is over, such as on a computer separate from the camera. For example, various PC software packages enable manipulation and enhancement of still photographs and video sequences after the acquisition process. Some image processing methods have been implemented in cameras for specific and limited purposes such as tone mapping, color balancing, de-mosaicing and gamma correction.

Another approach to achieving higher-quality pictures in still photography is bracketing which entails automatically taking multiple photographs (instead of just one) upon pressing of the "shoot" button, based on the rationale that the first picture will be the same (*i.e.* as good) as the single picture that would conventionally have been taken, and one of the additional pictures might by chance be even better, such as described in EP 1507234 to Microsoft, Corp.

In some methods all of the pictures are retained (which consumes xN memory per shot - where N is the number of automatic photographs per shot - decreasing the number of different shots that can be made by a factor of N). In other methods, an automatic evaluation process is applied and only one the photographs ("the best" in some sense) is selected and retained for each shot, such as described in JP 2004242362. In these methods, acquisition factors/characteristics, mainly exposure time, are used for bracketing.

Certain methods of achieving an enhanced-resolution picture by using data from multiple photographs of a subject are known, and are used, for example, in space photography. Moreover, certain methods of achieving an enhanced-dynamic-range picture by using data from multiple photographs of a subject are known, such as described in US 2002154242 and CA 2316451, EP1418544 discloses a digital image processing method, which involves adjusting light transmitted upon sensor to obtain digital images having different scene brightness ranges and processing images to generate composite image having extended dynamic range.

When taking a picture with a camera, there are often conflicting exposure parameters to choose from. For example, regarding the exposure time: on one hand, a photographer wants the exposure to be as short as possible so that the image will be free of blur; the shorter the exposure time, the less sensitive it is to motion blur due to movement of the camera and/or of the object. Also, short exposures decrease the chances for over-exposure in bright areas which saturates the area and destroys the information in that area. On the other hand, the longer the exposure is, the better the signal-to-noise-ratio ("SNR") and the dynamic range are, since more light is accumulated by the sensor, especially in dark regions. In cameras with aperture control, there are often also conflicting parameters involving the depth of field.

Prior art solutions use MEP to improve resolution, and dynamic range by properly combining multiple exposures (*i.e.* registering), such as described for resolution enhancement in an article by M. Irani and S. Peleg, Improving Resolution by Image Registration, CVGIP:GMIP, Vol. 53, May 1991, pp. 231-239 and for high dynamic range in an article by P. E. Debevec and J. Malik. Recovering High Dynamic Range Radiance Maps from Photographs. In SIGGRAPH 97, August 1997. The limitations of the registration process, especially for the purpose of super-resolution is described in an article by T.Q. Pham, M. Bezuijen, L.J. van Vliet, K. Schutte, and C.L. Luengo Hendriks, entitled Performance of optimal registration estimators, and appearing in Proc. SPIE, vol. 5817, 2005, pp. 133-144.

A discussion of SNR's effect on image quality can be found in an article by T.Q. Pham, L.J. van Vliet, and K. Schutte, entitled Influence of signal-to-noise ratio and point spread function on limits of super-resolution, in Proc. SPIE, vol. 5672, 2005, pp. 169-180.

## SUMMARY OF THE INVENTION

An aspect of some exemplary embodiments of the invention relates to acquiring quality digital images using an adaptive exposure control method.

In some embodiments of the invention, adaptive exposure control is used to analyze exposures taken by a camera and compute measures for the exposures' quality and usefulness in the MEP process. For example, predicting the achievable precision of a registration process between the exposures. In some embodiments of the invention, adaptive exposure control is implemented between at least two of a plurality of exposures whereby exposure parameters for a subsequent exposure are adaptively set based on an analysis of the content of at least one previous exposure. Exposure parameters optionally include at least one of exposure time, aperture control, focus, zoom, flash or other lighting source usage, for example. In an embodiment of the invention, the analyzed measures are influenced by at least one deficiency to gauge an exposure's usefulness, for example, its achievable precision when registered with at least one other exposure. Deficiencies which can be measured include for example, motion blur, underexposure or overexposure, high dynamic range, low contrast, limited depth of field, limited resolution, in an embodiment of the invention.

In an embodiment of the invention, adaptive MEP ameliorates simultaneously deficiencies including motion blur and of under/over-exposure using at least one feature of the camera. For example, an exposure control feature which allows the control of exposure times is used in an embodiment of the invention. Exposure times which risk motion blur in a specific scene are shortened to reduce the blur even though it causes the exposure to be underexposed, however the adaptive exposure control method recognizes the underexposed nature of the exposures and provides for a sufficient number of exposures to be aggregated to provide a properly exposed final image and to ameliorate the underexposure. In some embodiments of the invention, where little or no motion blur is detected, adaptive MEP can provide the same final image as conventional MEP in fewer and/or longer exposures as a result of exposure parameters being modified between exposures. In some embodiments of the invention, the final image is constructed of a plurality of short exposures in order to maintain sharpness while at the same time accumulating light from multiple exposures to increase the SNR and to avoid over-exposure when at least portions of at least some of the multiple exposures are combined.

While adaptive MEP methods are described above with respect to modifying exposure time, it should be understood that in some embodiments of the invention, other camera features are adaptable from exposure to exposure in an adaptive MEP process in order to ameliorate deficiencies and to provide a quality final image, as defined by the specific quality metrics that are being used. For example, a focus control, a flash control, a vibration mechanism control, an aperture control, and/or zoom control are all camera features which are used in embodiments of the adaptive MEP process.

In an embodiment of the invention, a previous exposure is subdivided into regions in order to perform a subdivided analysis on the previous exposure. Optionally, not all of the regions are analyzed, for example if it is already known that the region is of acceptable quality based on a previous analysis. In some embodiments of the invention, performance of an adaptive exposure control method enables the production of a quality image at the end of data acquisition without the need for a further step of post-acquisition processing.

An aspect of some exemplary embodiments of the invention relates to improving the depth-of-field of images by combining a plurality of exposures which use a small aperture setting. In some embodiments of the invention, MEP is used to provide a plurality of exposures which when aggregated have a higher amount of total "collected energy" than if just one of the exposures used. In an embodiment of the invention, using the collective energy of a plurality of exposures permits the use of a smaller aperture for each of the exposures than would typically be required for a single exposure. This use of a smaller aperture increases the depth-of-field of the exposures being captured. In an embodiment of the invention, an aperture setting and an exposure time are determined in order to ameliorate motion blur in an exposure which gives a desired depth-of field, but which does not give an adequate overall exposure. However, a plurality of exposures are captured using the determined aperture setting and are combined in order to generate a final image which has an adequate exposure. In some embodiments of the invention, this method is used for improving depth-of-field of images acquired in low light conditions.

An aspect of some exemplary embodiments of the invention relates to providing a MEP sequence which uses a plurality of integration times of the sensor within each exposure. Optionally, the MEP sequence is actually carried out using only a single exposure with multiple integration times. In some embodiments of the invention, an adaptive exposure control method is used in between exposures which include a plurality of integration times. Optionally, the adaptive exposure control method determines the integration times for exposures.

An aspect of some exemplary embodiments of the invention relates to the reduction of small aberrations in MEP exposures by analyzing a first exposure for the aberrations and capturing at least one other exposure responsive to the analysis, wherein a final image is created without the aberrations. In some embodiments of the invention, an example of a small aberration is an eye blink and/or movement of the subject. In an embodiment of the invention, movement can be planar and/or non-planar. Optionally, creating the final image comprises replacing a portion of the first exposure which has the aberration with a portion of the at least one other exposure which does not have the aberration. Small aberrations are identified by correlating neighborhoods or regions of a captured exposure with the corresponding neighborhoods in the reference exposure, in an embodiment of the invention. Neighborhoods which have an insufficient correlation score are not used in the creation of the final image. This accommodates for aberrations that might occur when the total exposures time is relatively long. Optionally, the reference exposure is any of the exposures taken during the MEP process.

An aspect of some exemplary embodiments of the invention relates to providing optical zoom without the need for moving mechanical parts. In an embodiment of the invention, optical zoom is achieved by applying super-resolution techniques to a part of a reference exposure, magnifying the part of the exposure. Optionally, the magnification level is a zoom factor set by the camera and/or the photographer. In an embodiment of the invention, a target image is created which only includes the part of the reference exposure which is super-resolution enhanced.

An aspect of some exemplary embodiments of the invention relates to providing a method for analyzing and compensating for imaging artifacts in an adaptive multiple exposure photography camera and/or sensor and/or optics. In an embodiment of the invention, imaging artifacts include distortion, vignetting, and/or bad pixels. In some embodiments of the invention, a series consisting of multiple exposures is captured by the camera. This series is analyzed for imaging artifacts. In an embodiment of the invention, an adaptive exposure control method is then used to acquire additional exposures to compensate for the artifacts and to construct a final image which ameliorates image deficiencies. Assessment of a specific camera's artifacts over the plurality of MEP processes, for example by using statistics of local motion vectors and/or intensity values, enables the camera to compensate for the artifacts during image processing. In an embodiment of the invention, assessment of the camera can provide a vignetting map, the location of bad/dead pixels and/or camera distortion all of which can be compensated for in processing. For example, in some embodiments of the invention, combined exposures are wrapped to correct the determined distortion map. In other embodiments of the invention, the distortion information is taken into account when computing the local motion between the exposures and when combining at least two exposures. In some embodiments of the invention, the vignetting is corrected by applying appropriate gain to different areas of the exposures when combining them. In some embodiments of the invention, bad pixels are interpolated using neighboring pixels, whether combining exposures or not.

An aspect of some exemplary embodiments of the invention relates to a method for reducing the size of the exposure data for saving data storage space and/or for processing and/or for transmitting the data to another device, such as a processor. In an embodiment of the invention, a plurality of exposures are captured and analyzed in a MEP process. A reference exposure is identified and saved, optionally using a compression scheme. The other exposures are analyzed for differences in relation to the reference exposure, in an embodiment of the invention. Differences between the reference exposure and the other exposures are coded and saved in storage and/or processed and/or transmitted to another device. Optionally, differences between the reference exposure and the other exposures are computed after compensating the other exposures for motion and/or for dynamic range shifts. In these cases the motion parameters and/or dynamic range parameters are coded together with the exposure differences. In some embodiments of the invention, differences are identified between exposures neither of which is the reference exposure.

An aspect of some exemplary embodiments of the invention relates to providing a camera which performs adaptive exposure control between at least two of a plurality of exposures. In an embodiment of the invention, the camera includes a data processor/controller and/or data storage. In some embodiments of the invention, the camera is integrated with a communications device, for example a cellular telephone. In some embodiments of the invention, the data processor/controller controls at least one of a flash, a vibration mechanism or an aperture control separately or in combination with an adaptive exposure control method.

An aspect of some exemplary embodiments of the invention relates to providing a camera which performs an exposure registration process which permits the use of a sensor which uses large pixels and/or a small fill-factor and/or low sensitive pixels as opposed to a sensor which uses small pixels and/or a large fill factor and/or high sensitive pixels and provides comparable image quality. In an embodiment of the invention, cost is saved in the manufacture of the camera using the large pixel and/or small fill-factor and/or low sensitive pixel sensor over the cost of a camera using a small pixel/large fill-factor sensor. In an embodiment of the invention, large and small numbers for pixels and fill-factors are relative to each other.

There is thus provided in accordance with an exemplary embodiment of the invention, a method for constructing a final image using adaptive exposure control in multiple exposure photography, comprising: (a) capturing an exposure; (b) analyzing the exposure at least to determine deficiencies in the exposure; (c) setting exposure parameters for at least one next exposure adapted to construct the final image with ameliorated deficiencies; (d) capturing the at least one next exposure using the set exposure parameters; and, (e) constructing a final image utilizing portions of at least the two exposures. Optionally, the setting is conducted to enable sufficient precision of a registration process between the next exposure and the exposure.

There is further provided in accordance with an exemplary embodiment of the invention, a method for acquiring registerable exposures for constructing a final image in multiple exposure photography, comprising: providing at least one feature to a multiple exposure photography camera; and, utilizing an adaptive exposure control method to acquire the exposures, comprising (a) capturing an exposure; (b) analyzing the exposure at least to determine deficiencies in the exposure; (c) modifying the at least one feature for at least one next exposure to create the final image which exhibits ameliorated deficiencies, while allowing registration; and, (d) capturing the at least one next exposure using the at least one feature modification. Optionally, providing at least one feature includes providing at least one of a focus control, an exposure control, an aperture control, a zoom, a flash control or other lighting source usage, and/or a vibration mechanism control to the camera. Optionally, analyzing is conducted to determine at least one deficiency including motion blur, overexposure or underexposure, high dynamic range, low contrast, limited depth of field, limited resolution of at least a portion of an exposure.

In an embodiment of the invention, if the deficiency is motion blur an exposure time of the at least one next exposure is reduced.

In an embodiment of the invention, if the reduced exposure time would result in underexposure, additional exposures are taken.

In an embodiment of the invention, the method further comprises combining at least potions that are underexposed of said exposure to produce a properly exposed image. In an embodiment of the invention, portions of at least two exposures are combined to produce the final image in which the at least one deficiency is ameliorated.

In an embodiment of the invention, if the deficiency is overexposure an exposure time of the at least one next exposure is reduced.

In an embodiment of the invention, the method further comprises combining useful portions from one exposure and useful portions from the next exposure to produce the final image having overall proper exposure.

In an embodiment of the invention, the method further comprises repeating (b)-(d) until a desired final image can be constructed from said exposures.

In an embodiment of the invention, the method further comprises registering at least the portions of at least the two exposures before constructing the final image.

Optionally, analyzing includes sub-dividing the first exposure into regions, and determining the presence of deficiencies on a region by region basis.

Optionally, analyzing comprises, analyzing each region using a measure reflecting at least one of motion blur, overexposure or underexposure, high dynamic range, low contrast, limited depth of field, limited resolution.

In an embodiment of the invention, the method further comprises classifying the exposure time of each region as done, valid, short or long.

In an embodiment of the invention, classifying a region as long indicates overexposure.

In an embodiment of the invention, classifying a region as short indicates underexposure.

In an embodiment of the invention, classifying a region as valid indicates an acceptable exposure time.

In an embodiment of the invention, classifying a region as done indicates acceptable motion blur and exposure time.

Optionally, a plurality of integration times are set for at least one exposure.

In an embodiment of the invention, setting exposure parameters includes setting at least one of focus, exposure time, aperture, zoom, flash or other lighting source and/or vibration.

Optionally, at least a portion of the analyzing is performed on device remote from the camera.

There is further provided in accordance with an exemplary embodiment of the invention, a method for improving the depth-of-field of a final image in multiple exposure photography, comprising: determining an aperture setting and exposure time, in order to ameliorate a motion blur, that gives the desired depth of field but does not give an adequate exposure; capturing a plurality of exposures using the determined aperture setting; and, generating a final image from a combination of the captured plurality of exposures.

There is further provided in accordance with an exemplary embodiment of the invention, a method for reducing aberrations in a final image of multiple exposure photography, comprising: capturing a first exposure; analyzing the first exposure to identify aberrations; capturing at least one other exposure responsive to said analyzing, wherein the first exposure or one of the at least one other exposures is designated a reference exposure; and creating a final image without the identified aberrations utilizing at least a portion of the reference exposure and at least one of the other exposures. Optionally, analyzing includes identifying at least one of eye blink or movement. Optionally, creating comprises replacing a portion of the first exposure which has the aberration with a portion of the at least one other exposure which does not have the aberration.

There is further provided in accordance with an exemplary embodiment of the invention, A method for analyzing and compensating for imaging artifacts in an adaptive multiple exposure photography camera, comprising: capturing a series of exposures using the camera; collecting statistics on the series of exposures; analyzing the statistics to identify camera based artifacts; creating camera calibration parameters to compensate for the artifacts based on the analyzing; and, utilizing the camera calibration parameters when taking at least one exposure subsequent to the series. Optionally, analyzing the statistics includes analyzing for at least one of distortion, vignetting, or at least one bad pixel. Optionally, analyzing for distortion includes determining differences in neighboring local motion vectors over the average of the series of multiple exposures. Optionally, analyzing the series for at least one of vignetting or at least one bad pixel includes averaging pixel values, after compensating for the exposure parameters.

There is further provided in accordance with an exemplary embodiment of the invention, a multiple exposure photography device, comprising: a storage; and, a controller, wherein the controller is programmed with software adapted for carrying out any method described herein, including adaptive exposure control in multiple exposure photography.

## BRIEF DESCRIPTION OF FIGURES

Exemplary non-limiting embodiments of the invention are described in the following description, read with reference to the figures attached hereto. In the figures, identical and similar structures, elements or parts thereof that appear in more than one figure are generally labeled with the same or similar references in the figures in which they appear. Dimensions of components and features shown in the figures are chosen primarily for convenience and clarity of presentation and are not necessarily to scale. In the attached figures:

Fig. 1A is a generalized flowchart for an adaptive data acquisition process, in accordance with an exemplary embodiment of the invention;
Fig. 1B is a generalized flowchart of a method for MEP, in accordance with an exemplary embodiment of the invention;
Figs. 2A-B are illustrations of an image divided into full regions and sampled patches of a region, in accordance with an exemplary embodiment of the invention;
Fig. 3 is a detailed flowchart of acquisition using an adaptive exposure control method, in accordance with an exemplary embodiment of the invention;
Fig. 4 is a detailed flowchart for calculating $status(i,r)$, in accordance with an exemplary embodiment of the invention;
Fig. 5 is a schematic of a portion of a camera for implementing MEP, in accordance with an exemplary embodiment of the invention;
Figs. 6A-B are an exemplary basic scene; Fig. 6C shows resultant images of the basic scene using prior art methodologies (without adaptive exposure control); and, Figs. 6D-H show a method of processing the basic scene to produce a final image using an adaptive exposure control process, in accordance with an exemplary embodiment of the invention.

## DETAILED DESCRIPTION OF EXEMPLARY EMBODIMENTS

Overview of Exemplary Adaptive MEP Process

As described above, conventional MEP can be used to improve image quality by taking multiple exposures of a scene and then combining at least parts of these exposures to produce a final, target image which is at least as good as a single exposure would have been.

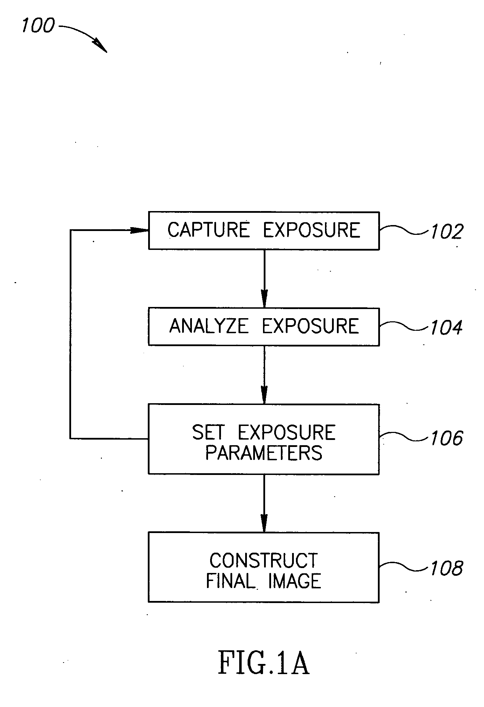

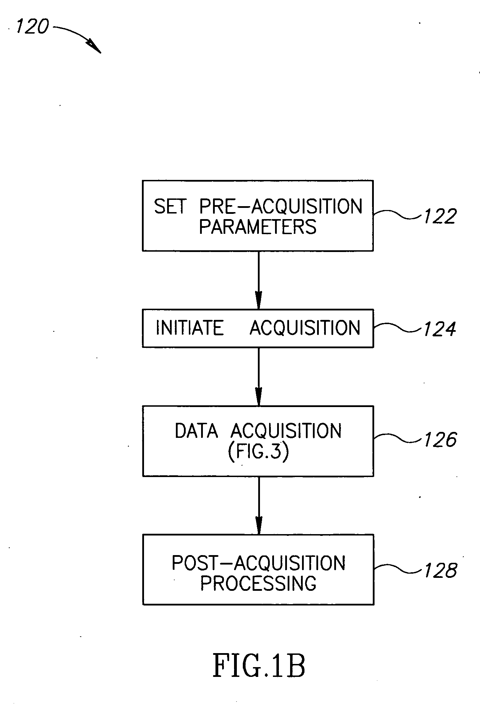

Fig. 1A shows a flowchart 100 which depicts an exemplary adaptive MEP data acquisition process, in accordance with an exemplary embodiment of the invention. In an embodiment of the invention, the adaptive MEP data acquisition process of Fig. 1A is used at action (126) of Fig. 1B described below. It should be understood that variations in the depicted methodology are possible and that actions are optionally added or removed from the method shown depending, for example, on the photographer, the scene, and/or operational parameters of a camera used to effectuate the adaptive MEP process.

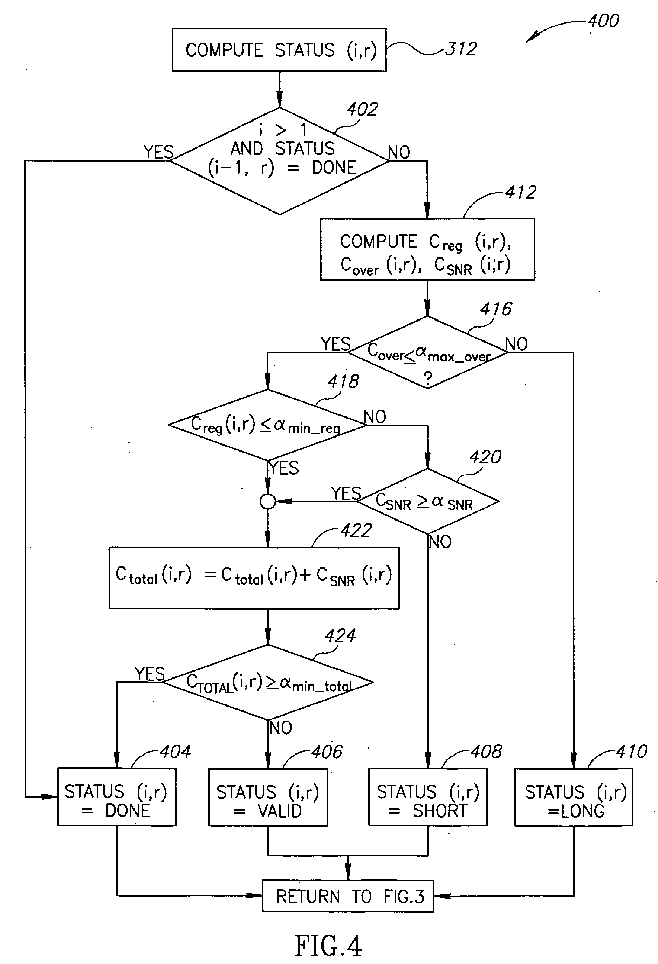

In an embodiment of the invention, an exposure is captured (102) by an MEP device, such as a camera. As described elsewhere herein, the initial exposure parameters for this exposure are chosen automatically by the camera and/or are manually chosen by the photographer. The captured (102) exposure is analyzed (104) for deficiencies pertaining to image quality and/or differences from previously captured exposures, for example motion blur and over/underexposure problems, and/or motion vectors relative to previous exposures. An exemplary analysis method is depicted in Fig. 4. Based on this analysis, exposure parameters for at least one subsequent exposure are set (106) which are adapted to ameliorate at least one of the image quality deficiencies. In some embodiments of the invention, motion blur and other deficiencies are handled simultaneously by adaptively setting the exposure parameters. A final, target image is constructed (108) which combines at least a portion of at least two of the previously captured exposures, in an embodiment of the invention. Optionally, construction (108) occurs after a plurality of capture (102) and analysis (104) cycles. In an embodiment of the invention, the final image is comprised of parts from one or more of the exposures. In some embodiments of the invention, the final image is comprised of a combination of a plurality of the exposures.

In some embodiments of the invention, deficiencies in at least one exposure are ameliorated by making modifications to camera features. For example the camera may be provided with features including at least one of a focus control, an exposure control, an aperture control, a zoom and/or a vibration mechanism control. Modification of at least one of these features from one exposure to the next in an adaptive exposure control method provides an amelioration of deficiencies, in some embodiments of the invention. In some embodiments of the invention, modification of at least one of these features is performed to ameliorate a deficiency in only a portion of an exposure, for example a portion being defined as a region. In such an embodiment, portions of at least two exposures are combined in order to construct a final image.

Fig. 1B shows a flowchart 120 of an exemplary MEP process, which includes an adaptive data acquisition process, such as described in Fig. 1A, in accordance with an embodiment of the invention. Pre-acquisition parameters are set (122) prior to initiating (124) the acquisition process wherein the camera actually takes exposures of a scene, in an embodiment of the invention. In some embodiments of the invention, pre-acquisition parameters are received and/or calculated and/or pre-defined, typically adjacently in time (including in part or in whole before and/or including in part or in whole after) to initiating (124) the acquisition process. Optionally, pre-acquisition parameters are derived from a setting that the photographer has manually chosen, automatically from a sensor on the camera, and/or from a software-programmed controller (described in more detail below) of the camera. In an embodiment of the invention, pre-acquisition parameters include and/or consider (a) aspects of the photographic environment which impact, or may be desired to impact, processing in accordance with the present invention (such as, without limitation, lighting conditions, scene type, degree of movement in scene, degree of movement of the camera, distance to subjects) and/or (b) camera settings (including, without limitation, exposure times, aperture, flash handling) and/or (c) aspects of the processing and analysis to be done (such as, without limitation, the number or total time of exposures, and for each exposure, any or all of: inter-exposure time, duration, aperture, flash handling), and/or (d) preferences of the photographer and/or the software-programmed controller.

In an exemplary embodiment of the invention, the acquisition process is initiated (124) in order to capture multiple exposures of a scene by the camera. Initiation (124) is optionally as a result of the photographer manually activating the camera or automatically from a timer, a sensor and/or a software-programmed controller.

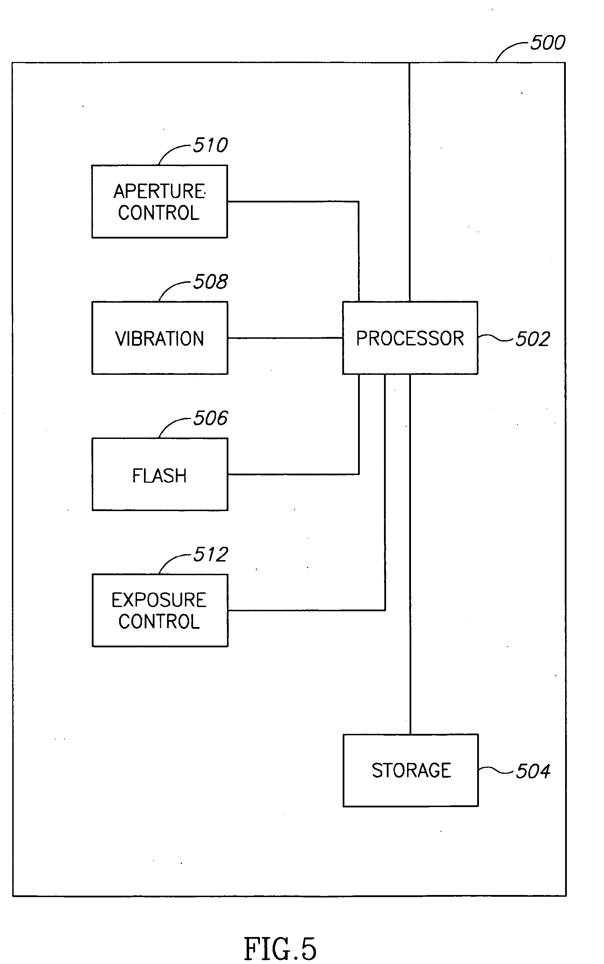

Data acquisition (126) is performed by the camera in order to capture a plurality of exposures of the scene being photographed, in an embodiment of the invention. Data acquisition (126) is described in more detail below, particularly with respect to adaptive exposure control, however it should be understood that data acquisition (126) includes adaptive exposure control which in some embodiments of the invention is comprised of a plurality of sub-processes including inter-exposure processing and/or post-exposure processing. In an embodiment of the invention, inter-exposure processing includes deriving data from at least one exposure, evaluating and/or manipulating the data, and/or storing data comprising at least a part of the at least one exposure and/or the results of the evaluating and/or manipulating and/or setting the exposure parameters for at least one subsequent exposure. In an embodiment of the invention, post-exposure processing includes deriving data from at least a part of the stored data, evaluating and/or manipulating the data, storing data comprising at least a part of at least one exposure and/or the evaluating and/or manipulating, and/or presenting a resultant image. In some embodiments of the invention, inter-exposure processing and/or post-exposure processing is performed by a data processor/controller 502, such as described below with respect to Fig. 5.

In an embodiment of the invention, each exposure is optionally analyzed and statistics are extracted based on information derived from the analysis. The exposure may consist of information of various modalities including but not limited to grayscale, color (*e.g.* RGB, YUV), from one or more sensors, partial color information using a Color Filter Array ("CFA") such as Bayer pattern, X-Ray, Infra-red, compressed images (*e.g.* JPEG), indexed images, and the like. The extracted statistics depend on the modality and the specific algorithms being used, and include, without limitation, the mean of the exposure, its variance, median and different order statistics information (*e.g.* the 1% percentile, the 99% percentile etc.). The extracted statistics are used in some embodiments of the invention, possibly together with the exposure parameters to calculate the range transformation needed to bring the exposure to a common ground with the other exposures, and/or to adjust the next exposure's parameters. Another exemplary statistics methodology is described below, in the "Other Exemplary Methods" section.

In some exemplary embodiments of the invention, post-acquisition processing (128) is conducted upon the conclusion of a data acquisition (126) process which captures a plurality of exposures. Optionally, post-acquisition processing (128) is performed on a target image which is a result of combining exposures captured during the data acquisition (126) process. Optionally, post-acquisition processing (128) is performed on at least one of the plurality of exposures captured during the data acquisition (126) process. The post-acquisition processing includes, without limitation, the fusion of the exposures into the result image and/or the processing described in the "An Exemplary Image Acquisition Apparatus" section.

Subdivision of a Captured Exposure

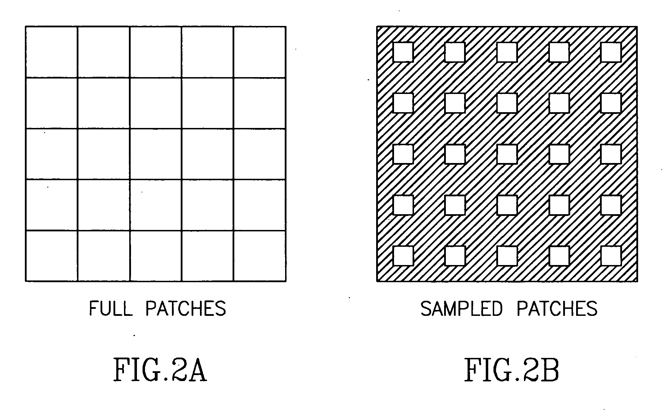

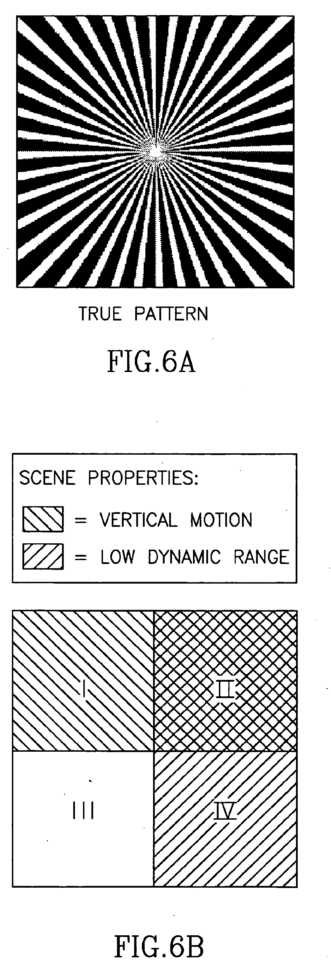

In some embodiments of the invention, a captured exposure is subdivided into regions, for example as shown in Fig. 2A and demonstrated in Fig. 6B, *inter alia*. At least one of these regions is analyzed, as described below with respect to Fig. 4, in the performance of adaptive exposure control during the MEP process. One reason for creating regions within the captured exposure is to handle scenes where different parts of the exposure need different exposure parameters. For example, the dynamic range might vary around the exposure and some parts may be brighter than others, hence their exposure times might be shorter than those in the darker areas of the exposure. Also, some parts might have different motion effects relative to others. In some embodiments of the invention, heuristic strategies are used to choose exposure parameters that will satisfy most regions in the exposure. To make the computation more efficient, in some embodiments of the invention, the regions are sampled by smaller patches from the regions, each patch representing a region, such as shown in Fig. 2B. Optionally, a patch is 8x8 pixels. Optionally, a patch is 16x16 pixels. In an embodiment of the invention, patch sizes are a compromise between the desire for small and efficient patches and patches big enough to capture sufficient information.

Exemplary Data Acquisition Process

In an embodiment of the invention, the data acquisition (126) process is enhanced by using adaptive exposure control, such that after each exposure in the adaptive MEP process, exposure parameters for a subsequent exposure are modified based on an analysis of at least one preceding exposure. In an embodiment of the invention, exposure parameters are chosen so that the exposures will be short enough to reduce blur and over-exposure, but long enough to allow for accurate registration (*i.e.* alignment) with a reference exposure. In some embodiments of the invention, certain parameters are defined and/or applied for adaptively setting the exposure time. In some embodiments of the invention, Minimal Exposure Time, Maximal Exposure Time and Maximal Total Exposure Time are used by the adaptive MEP process to compute the exposure parameters (exposure time, aperture, etc.).

- Minimal Exposure Time: The shortest exposure time that will result in an exposure with sufficient information to perform registration with the other exposures in an accurate manner. In some embodiments of the invention, exposures with exposure times shorter than the Minimal Exposure Time are undesirable as they will not register with other exposures. Minimal Exposure Time is described in more detail, below.
- Maximal Exposure Time: According to some embodiments of the invention, once the SNR in a single exposure (or in a region within the exposure) is high enough and/or the desired quality is reached, there is no need to make the exposure any longer. It should be understood that in some embodiments of the invention it is possible that the Maximal Exposure Time might be shorter than the Minimal Exposure Time, for example, when the image consists of flat color such as a white wall or cloudless skies, where registration is problematic and the Minimal Exposure Time can be quite long. Maximal Exposure Time is described in more detail, below.
- Maximal Total Exposure Time: Once the accumulated signal, over all exposures, is high enough so that the SNR based on the accumulated signal exceeds a threshold, there is no need for more exposures (for that region and/or for the whole image). The sum of all exposure times to reach this SNR is the Maximal Total Exposure Time, in an embodiment of the invention. Maximal Total Exposure Time is described in more detail, below.

Generally:

- Shorter exposure times are desirable, as long as the resulting exposures are useful (*i.e.* can be fused with the other exposures). In some embodiments of the invention, several short exposures can be added to simulate a long exposure, if needed.

- The Minimal and Maximal Exposure Times are different for different regions of the image in some embodiments of the invention. In such cases, heuristics are optionally used to choose the exposure parameters in order to maintain maximal information for all the regions in the image.

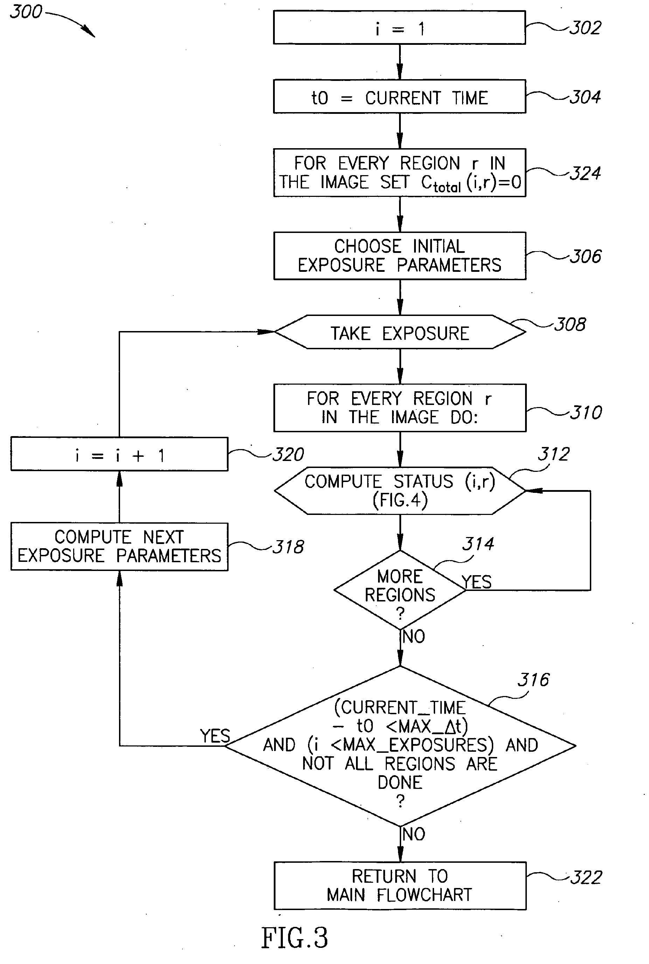

Fig. 3 shows a flowchart 300 of an exemplary adaptive exposure control process within an MEP methodology, for example as shown in Fig. 1. In an embodiment of the invention, flowchart 300 represents the data acquisition (126) action of Fig. 1. Assuming that at the commencement of flowchart 300 the exposure about to be taken is the first exposure, a variable for tracking the exposure number, $i$, is set (302) to 1. It can be seen that, in some embodiments of the invention, $i$ is adjusted (320) depending on the number of the exposure in the process. A time tracking variable, $t_0$, is set (304) to some sort of absolute time such as the time of day, in some embodiments of the invention. This time variable is optionally used for making a decision (316) later on in the flowchart 300. In some embodiments of the invention, the time tracking variable is used when it is desirable to limit the total exposure time (*e.g.* 0.5 s). For every region, r, in the exposure $C_{total}$ (i,r) is set (324) to 0, in an embodiment of the invention. In some embodiments of the invention, exposure parameters, for example exposure time, are chosen (306) for the first exposure.

In some embodiments of the invention, exposures parameters define the sequence of exposures to be made in a specific imaging series, and/or include, without limitation: the number of exposures, and for each exposure, any or all of: inter-exposure time, duration, aperture, flash handling, handling other controllable features of the camera (such as vibration adjustment, more examples described below). As described elsewhere herein, these exposure parameters are manually and/or automatically chosen. An exposure is taken (308) by the camera which captures an image of a scene, using the exposure parameters chosen (306) for the first exposure. In some embodiments of the invention, the image is subdivided (310) into a plurality of regions, each region representing a portion of the image. A status of at least one region is computed (312) in accordance with flowchart 400, which is shown in Fig. 4 and described in more detail below, in some embodiments of the invention. Optionally, additional regions are identified (314) whose status is to be computed (312) in order to assist with the setting (318) of the exposure parameters of a subsequent exposure. In an embodiment of the invention, a decision (316) is made about whether to take additional exposures. In some embodiments, the decision (316) is influenced by the assessed quality of the image. Optionally, the quality of the image is assessed by computing (312) the status of regions within the image. In some embodiments of the invention, parameters are used to assist with making the decision (316). Parameters can be, for example, a total number of exposures allowed, *max_exposures*, and/or a maximum elapsed time, *max_Δt*. In some embodiments of the invention, parameters have a default value. In an embodiment of the invention, data acquisition (126) is completed (322) when at least one of the following is satisfied: 1) all regions (or a number of regions greater than a preset threshold) acquire a "done" status, 2) the current time - $t_0 \geq$ *max_Δt*, and/or 3) $i \geq$ *max_exposures*.

Referring to Fig. 4, a flowchart 400 of a method for computing a regional status is shown, in accordance with an embodiment of the invention. The method of flowchart 400 is optionally used at action (312) of flowchart 300. In an embodiment of the invention, a region is analyzed for image quality based on at least one exposure parameter, for example exposure length. Generally, a region's status is classified as "done" (404), "valid" (406), "short" (408) or "long" (410) in some embodiments of the invention. In an embodiment of the invention, if the exposure number, *i*, is greater than 1 (*i.e.* this isn't the first exposure) and the particular region being analyzed was classified as "done" after analysis from a previously taken exposure, then a gateway decision (402) is made to avoid the rest of the computation and classify the region as "done". If however, this exposure is the first exposure and/or was not previously classified as "done", computations (412) for registration variance, $C_{reg}$, a ratio of over-exposed pixels, $C_{over}$, and/or the region SNR, $C_{snr}$, are performed for subsequent classification decisions. Exemplary computations for these values are described in more detail below. A region is defined to be over-exposed, or classified as "long" (410), if the ratio of the over-exposed pixels and the total number of pixels in the region exceeds a threshold $\alpha_{max\_over}$ (416), in accordance with an embodiment of the invention. At decision (418), a comparison is made to determine if the computed registration variance is less than or equal to a minimum registration variance threshold, $\alpha_{min\_reg}$. If the computed registration variance is more than the minimum registration variance threshold, an additional comparison is conducted (420) to determine if the region SNR is greater than or equal to a SNR threshold, $\alpha_{SNR}$. In an embodiment of the invention, if the region SNR is smaller than the SNR threshold, the region is classified as "short" (408), or in other words, it is under-exposed. If at (418) the registration variance is less than or equal to the minimum registration variance threshold or the region SNR is greater than or equal to the SNR threshold, then the region SNR is added to a region accumulated SNR, $C_{total}$, (422) summing the SNR for the region for all of the useful exposures taken thus far in the process. A comparison (424) is then made between the region accumulated SNR and a minimum accumulated SNR threshold, $\alpha_{min\_total}$, in some embodiments of the invention. If the region accumulated SNR is greater than or equal to the minimum accumulated SNR threshold, then the region is classified as "done" (404). If region accumulated SNR is less than the minimum accumulated SNR threshold, then the region is classified as "valid" (406). "Valid" in accordance with an embodiment of the invention means that the exposure time is acceptable. After the region has been classified, in an embodiment of the invention, the process depicted in flowchart 300 is resumed, optionally analyzing additional regions in a similar manner to the process shown in flowchart 400.

In some embodiments of the invention, one of the plurality of exposures is used as a reference exposure, in order to perform registration. Optionally, the reference exposure is the first exposure taken. In some embodiments of the invention, registration occurs at action (126). In some embodiments of the invention, registration occurs during post-acquisition processing (128). The reference exposure captures the scene that will be used as a reference to all the other exposures, in some embodiments of the invention. Other exposures will be motion compensated according to the reference exposure, and disputes between local contents in the exposures will be overridden by the reference exposure. For example, if when taking a picture of a person, the person blinks during exposures after an initial exposure, the pixels in the eye area as a result of the person blinking will be discarded in those exposures. Processing related to eye blinking is described in more detail below. In some embodiments of the invention, the reference exposure is selected based on processing parameters (wherein processing parameters define aspects of the operation of image processing and/or are set so as to consider and/or achieve a desired photographic environment, processing preferences and/or processing goals) and/or on the exposure statistics described above. The reference exposure can have special exposure parameters such as the optimal exposure parameters selected by the camera, and/or the reference exposure optionally uses a special light source such as a flash.

In an exemplary embodiment of the invention, the reference exposure is processed in order to provide an acceptable quality foundation for further processing of additional exposures. For example, bad pixels in the reference exposure are marked. Bad pixels include, without limitation, over- and under-exposed pixels (using predefined thresholds), pixels where the sensor is known to have dead pixels or pixels with low sensitivity (*e.g.* due to manufacture process), or pixels that where marked as bad manually, by software, or by an algorithm. The information of the bad pixels may be derived from the other exposures, or by using statistics of the pixels behavior gathered over time. Thereafter, in an embodiment of the invention the gain and offset of the reference exposure are computed based on the exposure statistics derived above, for example, by taking the 99% percentile as the highest value and the 1% percentile as the lowest value. The gain and offset are used to stretch the exposure to fill the allowed dynamic range in some embodiments of the invention. In some embodiments of the invention, any processing that is unique for the reference exposure is computed, such as the inverse Hessian matrix if the Lucas-Kanade algorithm is being used or various derivates-based information used by a registration methodology.

In an embodiment of the invention, a target (or emerging) image is initialized. Storage space, described below, Fig. 5, in the camera is allocated for saving the target image and the reference exposure is copied to the appropriate pixels in the target image. The size of the target image varies in different embodiments of the invention: it can be the same as the reference exposure, where the extra information from the other (short) exposures will be used to enhance the intensity/color, collect more energy to accommodate scenarios of low light, sharpen the image, extend the depth-of-field, etc. The size of the target image can be larger than the reference exposure, where the other exposures will also be used to enhance the resolution in addition to other improvements. The size of the target image can be smaller than the reference exposure where the image quality will be enhanced in various other aspects, such as dynamic range, but not in resolution.

The size of the target image can be larger than the reference exposure, where the other exposures will also be used to enhance the resolution in addition to other improvements. The size of the target image can be smaller than the reference exposure where the image quality will be enhanced in various aspects but not in resolution.

In some embodiments of the invention, non-reference exposures are registered with the reference exposure using an appropriate motion model with sub-pixel accuracy. Motion models include global motion models and local motion models (*e.g.* S. Baker and I. Matthews, Lucas-Kanade 20 Years On: A Unifying Framework, International Journal of Computer Vision, Vol. 56, No. 3, March, 2004, pp. 221 - 255.). Global motion includes without limitation models for translation only, rigid motion, and affine motion, and so forth. Local (dense) motion models may be used to account for moving objects and for objects in different distances from the camera that have different offsets between the two exposures. Local motion is optionally applied on the original exposures or using the result of the global motion estimation as its initial guess. All motion models are implemented using an iterative differential method and/or as a direct search on the parameter space, in some embodiments of the invention.

To speed-up the global motion computation performed in exposure registration such that it can be run in a low performance camera, pixel neighborhoods (*i.e.* areas) with the highest relevant information are marked and only they will be used for the global motion computation, in accordance with some embodiments of the invention. Optionally, relevant information includes at least one of high derivatives, edges and/or corners. The relevant information is optionally measured by a combination of derivatives in the x- and y-directions, for example, as described in an article by J. Shi, C. Tomasi, Good Features to Track, IEEE Conference on Computer Vision and Pattern Recognition, 1994.

As described elsewhere herein, small aberrations in a captured image, such as eye blinking, 3d rotations, or mixed movements of small objects such as leaves on a tree, during the acquisition process, can degrade the resulting image. This can be even more severe when using multiple exposures and allowing for longer total acquisition time. Although slight planar motion is handled in some embodiments of the invention by the registration methods described above, other aberrations are optionally handled using other corrective methodologies. Examples of other aberrations include eye-blink, where in one exposure the eye is open and in the other it is closed, and/or motion. For example, non-planar motion where the subject turns the head during the image capture process so that in one exposure the camera sees the face and in the other, it sees the profile of the head. In an embodiment of the invention, these other aberrations can be handled after performing the registration between an exposure and the reference exposure. Every neighborhood or region in the most recent exposure is correlated to a corresponding neighborhood or region in the reference image. Optionally, correlation is performed using: sum absolute differences ("SAD"); sum squared differences ("SSD"); normalized correlation; mutual information; and the like. In an embodiment of the invention, any neighborhood with a low correlation score is not used in the creation of the result high-quality image. As described herein; the reference exposure can be any of the exposures. For example, the first exposure, or an exposure that has the highest measure of quality as can be defined by the system.

In some embodiments of the invention, a multi-scale representation is optionally built in a way that each scale represents only part of the exposure information (*e.g.* Gaussian or Laplacian pyramids). In an embodiment, the target image is also created in a similar multi-scale representation, such that at the end of the computation the final result will be created by combining all the pyramid levels into a single image. In an embodiment of the invention, where a zoom option is being used, the target image optionally covers only the region of the reference exposure which is determined by the zoom parameters. The size of the target image in this case is the size of the original exposure and/or any other pre-defined size, in an embodiment of the invention.

In some embodiments of the described invention, portions of processing of exposures are performed only after acquiring all the exposures. This happens, in cases including but not limited to, where the camera lacks the resources needed to perform all the processing, and/or when the processing is performed on an external processor/controller, such as a computer. In some embodiments of the invention, exposures are stored in a memory, for example on the camera and/or on the computer, and can be accessed later for further processing or for communicating to an external processor. In an embodiment of the invention, where a plurality of exposures is stored in a memory, the reference exposure can be any one of the exposures.

Exemplary Parameters for the Exposure Parameters Computation

In some embodiments of the invention, parameters such as Minimal Exposure Time, Maximal Exposure Time and/or Maximal Total Exposure Time are used in the performance of an adaptive exposure control MEP process. For example, the exposure parameters described below are used at actions (312) and (318) of flowchart 300, described above. Furthermore, the exemplary calculation methods described below can be used in action (412) to calculate $C_{reg}$, $C_{over}$, and/or $C_{snr}$.

In an exemplary embodiment of the invention, Minimal Exposure Time is defined as the minimal exposure time that results in registration variance that is smaller than a predefined threshold; the registration variance is computed analytically for specific models of registration and noise. For example, when the gain and offset that are being used by the camera to modify the intensity are known as a function of the exposure time (*e.g.* by calibration), the images are normalized and the registration process is formulated as a local shift between the images captured by the exposures. If, in some embodiments of the invention, additive, independent, Gaussian noise is assumed, then registration between images $I_1(x,y)$ and $I_2(x,y)$ is formalized by finding local shift ($u(x, y)$, $v(x, y)$) between the two images such that:

$$\mathbf{I}_1(x,y) = \mathbf{I}(x,y) + n_1(x,y)$$

$$\mathbf{I}_2(x,y) = \mathbf{I}(x + u(x,y), y + v(x,y)) + n_2(x,y)$$

where $n_1(x,y)$ and $n_2(x,y)$ are Gaussian additive noise with a variance $\sigma_n^2$. For an embodiment where Gaussian noise is assumed, it can be shown that a Cramer-Rao Lower Bound ("CRLB") can be used to find the registration precision. For unbiased estimators, the CRLB for estimating the variance of parameter vector m is

$$E\left[(\hat{m}_i - m_i)^2\right] \geq \mathbf{F}_{ii}^{-1}(\mathbf{m}),$$

where F is the Fisher information matrix, which is

$$\mathbf{F}(\mathbf{m}) = E\left[\frac{\partial}{\partial \mathbf{m}} \log \Pr(r \mid \mathbf{m})\right]\left[\frac{\partial}{\partial \mathbf{m}} \log \Pr(r \mid \mathbf{m})\right]^T.$$

In an embodiment of the invention, the parameter vector is v=(u,v) and the Fisher information matrix is

$$\mathbf{F(v)} = \frac{1}{\sigma_n^2} \begin{bmatrix} \sum \mathbf{I}_x^2 & \sum \mathbf{I}_x \mathbf{I}_y \\ \sum \mathbf{I}_x \mathbf{I}_y & \sum \mathbf{I}_y^2 \end{bmatrix},$$

where $\mathbf{I}_x$ and $\mathbf{I}_y$ are the x- and y-derivatives of $\mathbf{I}$.
The lower bound for the registration is thus

$$\mathrm{var}(u) \geq \mathbf{F}_{11}^{-1} = \sigma_n^2 \frac{\sum \mathbf{I}_y^2}{\det(\mathbf{F})} = \sigma_n^2 \frac{\sum \mathbf{I}_y^2}{\sum \mathbf{I}_x^2 \sum \mathbf{I}_y^2 - \left(\sum \mathbf{I}_x \mathbf{I}_y\right)^2}$$

$$\mathrm{var}(v) \geq \mathbf{F}_{22}^{-1} = \sigma_n^2 \frac{\sum \mathbf{I}_x^2}{\det(\mathbf{F})} = \sigma_n^2 \frac{\sum \mathbf{I}_x^2}{\sum \mathbf{I}_x^2 \sum \mathbf{I}_y^2 - \left(\sum \mathbf{I}_x \mathbf{I}_y\right)^2}$$

Combining the bounds on the u and v, results in the lower bound for the registration accuracy:

$$\mathrm{var}(reg) \geq C_{\mathrm{reg}} = \sigma_n^2 \frac{\sum \mathbf{I}_x^2 + \sum \mathbf{I}_y^2}{\sum \mathbf{I}_x^2 \sum \mathbf{I}_y^2 - \left(\sum \mathbf{I}_x \mathbf{I}_y\right)^2}$$

This bound can be reached by the application of registration algorithms, for example as described in T.Q. Pham, M. Bezuijen, L.J. van Vliet, K. Schutte, and C.L. Luengo Hendriks, entitled Performance of optimal registration estimators, and appearing in Proc. SPIE, vol. 5817,2005, pp. 133-144.

In another exemplary embodiment of the invention, Minimal Exposure Time is similarly computed according to the derivation described in an article by M.D. Robinson and P. Milanfar, Fundamental Performance Limits in Image Registration, IEEE Trans. Image Processing, 13(9):1185-1199, 2004. resulting in:

$$\mathrm{var}(u) \geq \frac{\sigma_n^2}{\sum \mathbf{I}_x^2} \qquad \mathrm{var}(v) \geq \frac{\sigma_n^2}{\sum \mathbf{I}_y^2}$$

$$\mathrm{var}(reg) \geq C_{\mathrm{reg}} = \sigma_n^2 \frac{\sum \mathbf{I}_x^2 + \sum \mathbf{I}_y^2}{\sum \mathbf{I}_x^2 \sum \mathbf{I}_y^2}$$

In an embodiment of the invention, the longer the exposure time is, the higher the value of $C_{\mathrm{reg}}$.

Minimal Exposure Time is defined as the shortest exposure time that will result in the registration variance that is desired, in accordance with an embodiment of the invention. That is, a Minimal Exposure Time is selected that will satisfy the following

$$C_{\mathrm{reg}} \leq \alpha_{\mathrm{min\_reg}}$$

for a predefined $\alpha_{\mathrm{min\_reg}}$. In an embodiment of the invention, $\sigma_n^2$ is known by calibrating the camera, for example by measuring the camera response for different exposure parameters. $C_{reg}$ is calculated using the equation above, when an exposure is taken in accordance with an embodiment of the invention. In an embodiment of the invention, if the calculated result is larger than a predefined threshold, then the exposure needs to be made longer. However, if the calculated result is smaller than the predefined threshold, then it is expected that the desired registration accuracy will be achieved. Optionally, the exposure time is made even shorter, to reduce motion artifacts in accordance with some embodiments of the invention.

It can be understood from the above formulae, that the Minimal Exposure Time depends on at least one of a plurality of factors: higher sensor noise requires higher exposure time in order to achieve the desired registration precision. The image content is another factor which plays a role in setting the Minimal Exposure Time (*i.e.* the more the gradients in the image, the more accurate the registration will be, even with shorter exposure time). In an embodiment of the invention, the effect of the image gradients on the exposure time also relates the motion blur to the minimal exposure time. For example, when there is a blur due to the movement of the camera and/or objects in the scene, the image gradients will decrease and therefore the exposure needs to be longer. However, in an embodiment of the invention, it is considered that a longer exposure is only helpful up to the point where the motion is so severe that a longer exposure increases the blur in an amount that its negative effect on the registration variance is stronger than the positive effect of accumulating more light. In some embodiments of the invention, compensating for the relative motion between the multiple exposures and using short exposure times results in sharper images with less blur.

While the embodiment described above for calculated Minimal Exposure Time assumes an additive Gaussian noise, the same basic principles also apply for other noise models. For example, shot noise that is modeled by an independent Gaussian noise with variance that is proportional to the intensity (*e.g.* Poisson noise that is typical model for shot-noise in sensors).

As described above, sometimes it is desirable to increase the time of the exposure. However, taking long exposures can result in over-exposed areas in the image/region, reducing quality and/or losing at least a portion of the usable information in these areas. In an exemplary embodiment of the invention, a pixel is defined as over-exposed if the pixel's intensity exceeds a threshold $\alpha_{over\_exposed}$. A region is defined to be over-exposed if the ratio of the over-exposed pixels and the total number of pixels in the region exceeds a threshold $\alpha_{max\_over}$, in accordance with an embodiment of the invention. In an embodiment of the invention, a region is valid as long as the ratio of over-exposed pixels is below the threshold:

$$C_{over} = \frac{\left| \left\{ x \mid x \geq \alpha_{over\_exposed} \right\} \right|}{a} \leq \alpha_{max\_over}$$

where x are the pixels in the region that exceed the threshold, $|\cdot|$ represents the size of a set, and a is the total number of pixels in the region.

Taking long exposures can be problematic due to motion blur, even when over-exposure is not reached, as the amount of motion blur is linearly proportional to the exposure time. Therefore, in some embodiments of the invention, a Maximal Exposure Time parameter is used in the performance of adaptive exposure control. In an embodiment of the invention, there is a Maximal Exposure Time for each region in the image where the desired SNR, $\alpha_{min\_SNR}$, is reached and longer exposures are no longer beneficial and might even be harmful. In some embodiments of the invention, a region of an exposure is considered valid (*e.g.* usable) if:

$$C_{SNR} = \frac{\frac{1}{a} \sum I^2}{\sigma_n^2} \geq \alpha_{SNR}$$

for a predefined SNR threshold, $\alpha_{SNR}$. In some embodiments of the invention, the Maximal Exposure Time might be smaller than the Minimal Exposure Time, such as described above. For these cases, where registration might be problematic due to the Maximal Exposure Time being smaller than the Minimal Exposure Time, we limit the exposure time from growing too much by validating exposures where $C_{SNR} \geq \alpha_{SNR}$ even though the minimal exposure time was not achieved.

Another parameter which is used in some embodiments of the invention in the performance of adaptive exposure control is Maximal Total Exposure Time. In an embodiment of the invention where the motion between exposures is small relative to the area being analyzed (*e.g.* the full frame or a region within the frame), the accumulated signal is estimated by summing the SNR accumulated by at least one, optionally all, of the exposures. In some embodiments of the invention, once the accumulated SNR, $C_{total}$, exceeds a threshold, $\alpha_{min\_total}$, there is no need for more exposures for that region. In an embodiment of the invention, the Maximal Total Exposure Time, $C_{total}$, formula is:

$$C_{total} = \sum_{status(i,r)=valid} C_{SNR} \geq \alpha_{min\_total}$$

where the summation is done over all the exposures that are valid for the region.

In some embodiments of the invention, where the sensor allows for multiple readouts without resetting the pixel values (*e.g.* CMOS sensors), several exposures can be taken simultaneously wherein a short exposure followed by longer one, for example as described below with respect to short/long exposure time interlacing. The advantage of this approach is in shorter total exposure time.

Choosing Exposure Parameters

In general, specific exposure parameters might be valid for some regions, too short for some and too long for others. In an embodiment of the invention, different strategies are used which are different in the way they try to "satisfy" all regions. There are several possible strategies for choosing the exposure parameters both for the first exposure and for the subsequent ones.

It should be noted that in an embodiment of the invention, the MEP process is used with a flash. For example, the flash is used in some embodiments of the invention where there are regions of the image where the computed registration variance ($C_{reg}$) is not reached even with longer exposure times. Optionally, the flash is used by some of the exposures to increase the dynamic range and to allow for short exposures even when light is too low. In embodiments of the invention where the flash is controllable (*e.g.* duration and intensity), flash parameters are optionally controlled by the controller 502 in combination with the adaptive exposure control method. Alternatively, additionally or optionally, aperture control and/or a vibration mechanism (*e.g.* to create motion between the exposures and hence allow for super-resolution) and/or other photography techniques and/or components are used with the MEP process. Aperture control is optionally used by data controller 502 to control the amount of light and the depth of field of the exposures. In an embodiment of the invention, aperture control and/or the vibration mechanism are used in combination with the adaptive exposure control process described herein.

The exposure parameters for the first exposure are chosen automatically by the camera as if it was the only exposure, in some embodiments of the invention. For example, as if the presently described MEP process with adaptive exposure control was not being used. In this embodiment, the purpose of subsequent exposures is to complement information that was not properly captured by the first exposure (*e.g.* under- and over-exposed areas, and motion blur). This strategy allows for comparison of a resultant MEP image with the image taken by the camera without MEP (*i.e.* the first exposure). This also allows for a fallback image in case of technically difficult scene to capture, for example, extremely high motion. In some embodiments of the invention, the photographer will be presented with the default image and with the adaptive MEP final image and will be able to choose between them.

In some embodiments of the invention, the automatically chosen first exposure parameters are altered, for example using only a predefined fraction (β) of the chosen exposure time, prior to the capturing of the first exposure. In some embodiments of the invention, preset first exposure parameters are used. Optionally, the preset first exposure time is shorter than would have been automatically chosen by the camera absent the usage of the present MEP process.

In an embodiment of the invention, after the first exposure is taken, adaptive exposure control is used to make adjustments to subsequent exposures captured in the MEP process. An analysis, for example the analysis shown in Fig. 4, of at least a portion of the captured scene (*e.g.* a region) is used to determine if the portion could benefit from at least one additional exposure with an adjusted exposure parameter. Different regions in the frames can result in different requirements for the next exposure parameters.

In an exemplary embodiment of the invention, status for at least one of the regions in the initial exposure is computed, for example as described above with respect to Fig. 4. A check is performed to determine if there were any regions with "status=long" or "status=valid", in an embodiment of the invention. Regions with long or valid status are correctable by modifying exposure parameters of the next exposure, for example by shortening the exposure time. In some embodiments of the invention, if there are more than a predefined number of such regions, the exposure time is shortened by a predefined percentage, for example $t_{next} = k_1 * t_{previous}$ (*e.g.* $k_1$=0.7, which will give a next exposure time, $t_{next}$, that is 70% of the previous exposure time, $t_{previous}$), and take the next exposure. In an embodiment of the invention,

14

this procedure is repeated until the number of "long" or "valid" regions is smaller than the predefined number of regions and/or until a predefined minimum exposure time is reached. In an embodiment of the invention wherein a predefined minimum exposure time is reached, if there are still regions with "status=long", they are marked as "invalid" and are not taken into account when computing the next exposure parameters (as they are over-exposed even when using the shortest allowed exposure).

In an embodiment of the invention, shortening the exposure time can lead to regions which originally were indicated as "status=long" changing to "valid", and regions which were originally indicated as "status=valid" changing to "short" when analysis is performed after subsequent exposures. The exposure time which leads to these transitions is optionally recorded. As additional subsequent exposures are taken, regions will change from "valid" to "done", in accordance with an embodiment of the invention. Once there are no more "long" regions and the number of "valid" regions falls below the predefined number, the exposure time is optionally increased (using the recorded exposure times) to a level where the number of "valid" regions exceeds the threshold. In some embodiments of the invention, if there are not enough "valid" regions and there are "short" regions, the exposure time is increased by a predefined percentage $t_{next} = k_2 * t_{previous}$ (*e.g.* $k_2=1.5$) and the next exposure is taken. This process is optionally repeated until all regions are "done", or until the maximal number of exposures or the maximal total exposure time are reached.

In some embodiments of the invention, short and long exposures are interlaced in order to capture a scene without high motion and/or blur (*i.e.* using the short exposures) and with sufficient information to fill in each region in the final image (*i.e.* using long exposures). Optionally, one long exposure is interlaced between series of short exposures, each series consisting of a plurality of short exposures. In some embodiments of the invention, the exposure time of the long exposure is incrementally increased as long as there are a number of "short" regions above a predefined threshold number.

Modem sensors (*e.g.* CMOS sensors) allow for multiple integration times during the same exposure (*e.g.* if the total exposure time is T, it is possible to get several intermediate readouts at times: $0 < t_1 < t_2 < ... < T$). In an embodiment of the invention, a continuous sequence of short exposures is captured with known preset integration times allowing for a differentiation of exposures by taking the difference between consecutive readouts: $I(t_{i+1}) - I(t_i)$. In some embodiments of the invention, adaptive exposure control is used to set the integration times between exposures. Longer exposures are used using the same integration times by deriving $I(t_{i+k}) - I(t_i)$ with $k>1$, according to some embodiments of the invention. This allows for various exposure times to be acquired simultaneously, thereby shortening the total acquisition time, minimizing the undesired motion effect, and/or easing the registration process.

Other Exemplary Methods

In an embodiment of the invention, an optical zoom is provided to a camera without the need for a mechanical zoom solution. The effect of optical zoom is optionally achieved by applying super-resolution techniques such as those described herein on a part of the image, comprised for example of a region or multiple regions, and magnifying it to the original image size. In an embodiment of the invention, the target image is actually only a part of the original image, the size of the part being determined by a selected zoom factor. Optionally, the zoom factor is chosen by the camera or by the photographer.

It is known in the art that some imaging artifacts are different for every camera and therefore in some cases no common factory calibration can be performed. Such artifacts include distortion, vignetting, bad pixels, etc.

In an embodiment of the invention, statistics are gathered over time about individual exposures and relationships between multiple exposures (*e.g.* pixel values and local motion vectors between exposures) which are used to determine characteristics of the specific camera being used. For example, averaging the pixel values, after compensating for the exposure parameters, over a large number of images can give the vignetting map (lower average values in the image periphery) of the camera and/or the location and values of bad/dead pixels (lower pixels values relative to the neighboring pixels) of the camera. Determining differences in neighboring local motion vectors over the average of a large collection of exposures results in the distortion characteristic of the camera.

Once these characteristics are determined, they are compensated for, in an embodiment of the invention. For example, in some embodiments of the invention, exposures are wrapped to correct the determined distortion map. In other embodiments of the invention, the distortion information is taken into account when computing the local motion between the exposures and when fusing together several exposures. In some embodiments of the invention, the vignetting is corrected by applying appropriate gain to different areas of the exposures. In some embodiments of the invention, bad pixels are interpolated using neighboring pixels.

In an embodiment of the invention, this self-calibration process is done on the camera itself. In some embodiments of the invention, this self-calibration process is done on a remote device, for example a server in operable communication with the camera. Optionally, the server performs processing on exposures captured by the camera. In some embodiments of the invention, exposures and calibration information are communicated between the camera and the remote device, for example as described below with respect to the client/server mode of operation of the camera.

An Exemplary Image Acquisition Apparatus

In an embodiment of the invention, an apparatus 500 is provided for acquiring images using the exposure registration and/or adaptive exposure control methods described herein. Fig. 5 shows a schematic of apparatus 500, which is for example at least a portion of a camera, including at least a data processor/controller 502 and/or data storage 504, in accordance with an exemplary embodiment of the invention. Apparatus 500 is incorporated into a communication device in some embodiments, for example into a cellular telephone and/or a personal digital assistant ("PDA"). Such communication device allows the camera to share with other processing entities the unprocessed exposure, partially or fully processed exposures, statistics, and other imaging related information. Data processor/controller 502 is programmed with software adapted for providing operating instructions for performing at least one of the exposure registration and/or adaptive exposure control methods described herein, in accordance with an embodiment of the invention. In an embodiment of the invention, data storage 504 is used for storing the target image and/or is used for storing data comprising at least a part of at least one exposure and/or the intermediate results of the evaluating and/or manipulating, such as described above. In some embodiments of the invention, apparatus 500 is also provided with at least one of: an image display/projector, for displaying/projecting captured exposures to the photographer; at least one communications port, for uploading and/or downloading data to/from apparatus 500; and/or manually operated controls, to allow the photographer to select various operation modes of apparatus 500.

In some embodiments of the invention, data processor/controller 502 does not fully process captured exposures and/or the final image. It is noted that with most cameras, there is no need to enhance the full image at the camera, as it can only display a small fraction of the pixels on the viewfinder or screen. In an embodiment of the invention, data processor/controller 502 processes a downscaled version of the enhanced image that gives the photographer the "feeling" of the full enhanced image (with a fraction of the resources needed for the full processing). Additionally, alternatively or optionally, the full processing is done on a device external to the camera where the resources (power, CPU, memory, etc.) are more available, and where the full scale image is more likely to be used (e.g. for printing or for displaying on a high resolution screen). In some embodiments of the invention, the process results, including fully processed image, thumbnail of the processed image, statistics, calibration parameters and other imaging related information are communicated back to the camera.

In an exemplary embodiment of the invention, storage space is saved in data storage 504 by taking advantage of the processing that is already conducted on a series of MEP exposures and/or the inherent similarity of the exposures due to the relatively short time in between them. As described above, global motion is calculated in some embodiments to perform registration. The same measurement is optionally used to calculate the differences between exposures for saving storage space. By calculating relative differences between the exposures and coding the calculated differences, an entire series of exposures can be stored as a reference exposure plus the coded differences of the other exposures in the series. Using such a technique, significant compression ratios can be achieved. Differences between exposures are calculated for any number of factors, for example global motion and/or dynamic range. In some embodiments of the invention, the exposures are taken using different exposure parameters, for example when adaptive exposure control is used. However, since these parameters are known, they can be used to bring the images to a common dynamic range using appropriate gain and offset in order to increase the similarity between the exposures and improve the compression process. In an embodiment of the invention, the compression is done using the other compression schemes that available on the camera.

In some embodiments of the invention, the camera works in a "client/server mode", wherein the camera operates as the "client" for capturing exposures and communicating them, via a communications interface, to a remote device which operates as the "server". In an embodiment of the invention, at least a part of the processing of the image is performed by the server. Optionally, the client performs at least a part of the processing. In some embodiments of the invention, the client is located in a device with substantially limited capabilities, a cellular telephone or a PDA, for example. Optionally, the client camera is used to capture exposures while a server in communication with the client performs at least some of the processing. In an embodiment of the invention, processed images are returned by the server to the client. Optionally, the exposures captured by the client are further processed on the server and stored for retrieval by the photographer, transferred to other server providers, or sent to the photographer using any available communication (e.g. email, ftp, etc.).

It should be understood that multiple camera usage techniques and camera features (e.g. a flash control 506, a vibration mechanism control 508, an aperture control 510, a focus control (not shown), a zoom control (not shown) and/or exposure control 512) are described in this application which can be used separately or in combination to meet enhancement goals, photographer preferences and/or photographic circumstances. These techniques include: super-resolution, dynamic range enhancement, reduced noise, enhanced depth-of-field, reduced blur, bright light/ low light performance, elimination of undesired momentary details, elimination of lens artifacts, better color by reducing the need for demosaicing algorithms (missing color pixels due to the color-filter-array are collected from the other exposure after motion compensating them), elimination of sensor artifacts, provision of optical zoom performance with no moving parts, provision of flash performance with no flash, provision of multi-sensor performance with single sensor, provision of various manipulations of the exposures including without limitation different handling of parts of the scene that are high-motion and low-motion between exposures. Data processor/controller 502 is used to implement at least one or all of these techniques and/or features individually or in combination, in accordance with some embodiments of the invention.

An Adaptive Exposure Control Method Example

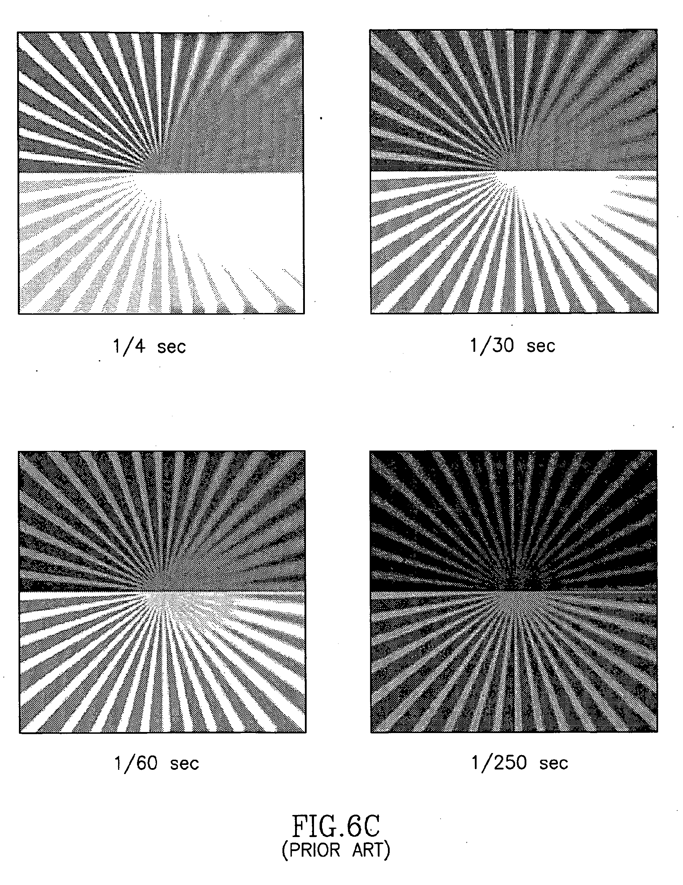

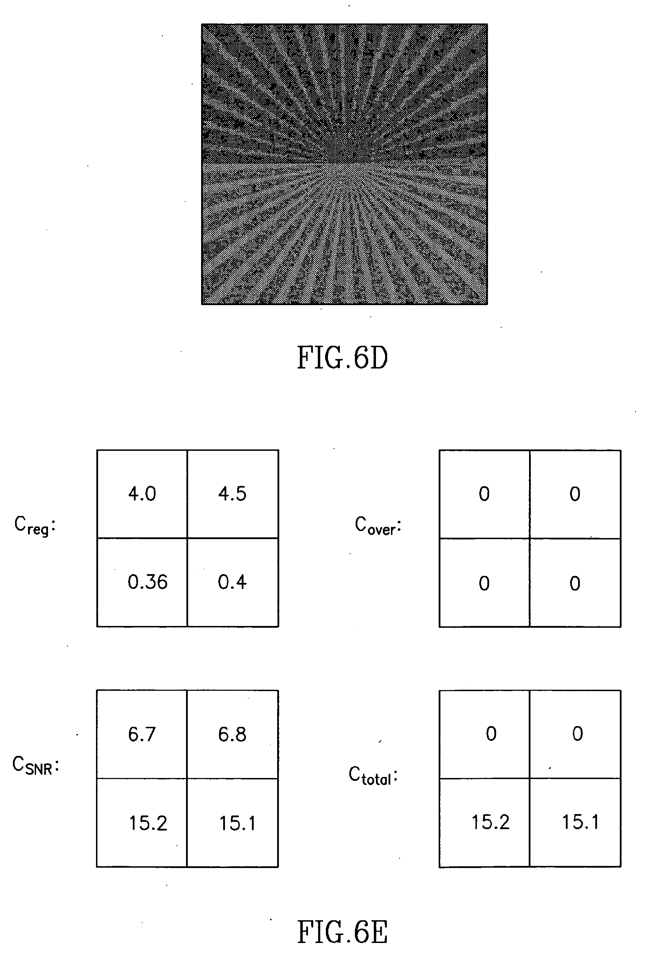

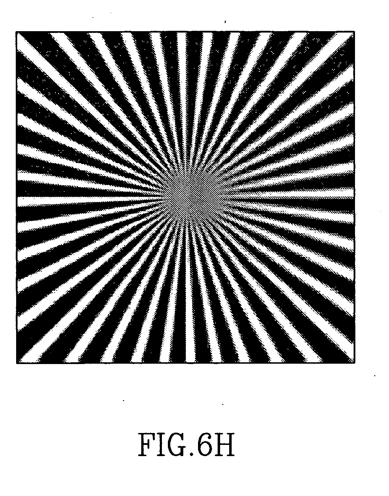

Figs. 6A-6H show an example of an adaptive exposure control method in principle, in accordance with an exemplary embodiment of the invention, including the basic scene (Figs. 6A-B) and prior art methodologies (Fig. 6C). Fig. 6C shows images of the scene as if taken, using various exposure parameters, without adaptive exposure control and Figs. 6D-6H show a method for adaptive exposure control for producing a final, target image, shown in Fig. 6H, which is better than any of the images which would have been achieved according to standard photography, as shown in Fig. 6C. In this example, the scene being captured is depicted in Fig. 6A. A subdivided exposure of the scene is shown in Fig. 6B, which is divided into four regions, I-IV, in this exemplary embodiment of the invention. The scene of 6A, when captured by a hypothetical camera with default exposure parameters and/or user selected exposure parameters, would produce vertical motion in regions I and II and low dynamic range in regions II and IV, as shown in the graded Fig. 6B.

Referring to Fig. 6C, the same scene is shown in four different panels with different exposure times selected to improve each of the four regions. The exposure times are selected based on prior art methodologies and generally are implemented to improve a specific region of the image. It can be seen that the four panels in Fig. 6C include regions which are under-exposed, over-exposed and/or blurred and none of them captured well all the four quadrants. The numbers beneath each panel indicate exposure time.

Fig. 6D shows a first exposure taken of the same scene as shown in Fig. 6A, in accordance with an exemplary embodiment of the invention. In the first exposure, exposure parameters are chosen as described above in the "Choosing Exposure Parameters" section, either automatically by the camera and/or by choosing a fractional value of an automatically chosen exposure parameter, for example. In this example, it was noted that 1/250s was the shortest exposure time which would have been chosen automatically by the camera without implementation of the adaptive exposure control method, therefore, data processor/controller 502 chooses a fractional amount of 1/250s, for example 1/500s, in accordance with an exemplary embodiment of the invention. It should be understood that while the fractional amount chosen by implementing the adaptive exposure control method was half the value of the shortest automatically selected value, this fraction can be modified to suit the needs of the scene being captured and/or the photographer's desires. In some embodiments of the invention, a light meter is used to determine an ideal exposure time, and a fraction of the light meter determined ideal time is used in the performance of the adaptive exposure control method.

Referring to Fig. 6E, the subdivided first exposure is shown wherein for each region $C_{reg}$, $C_{over}$, $C_{snr}$ and $C_{total}$ are computed according to the methodology described above with respect to Fig. 4 and the "Exemplary Parameters for the Exposure Parameters Computation" section. In this example, a threshold of $\alpha_{min\_reg} = 2$ is used which eliminates regions I and II from use since their $C_{reg}$ were calculated as 4.0 and 4.5, respectively (both numbers being above the threshold). Based on this computation, it is determined that regions I and II would need a longer exposure time in order to reflect lower computed registration precision. In an exemplary embodiment of the invention, the computed $C_{snr}$ for the useful regions III and IV is added in order to form a $C_{total}$ computation.

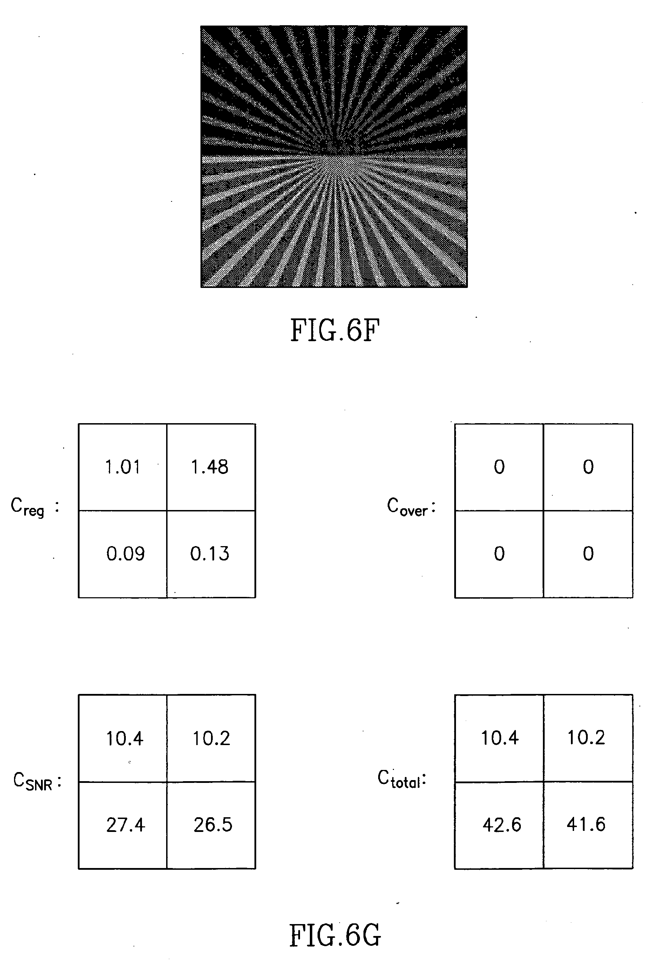

As described above with respect to Fig. 6E, it was determined that the exposure time should be lengthened in order to move the $C_{reg}$ of regions I and II below the threshold, $\alpha_{min\_reg}$. In this example, a new exposure time of 1/250s is chosen which is longer than the previous 1/500s exposure time. Fig. 6F shows the scene captured at the new exposure time (which in this example happens to be the same exposure time as the fourth panel shown in Fig. 6C). Again $C_{reg}$, $C_{over}$, $C_{snr}$ and $C_{total}$ are computed for each region (shown in Fig. 6G), and it is seen that for regions I and II the $C_{reg}$ is now below the $\alpha_{min\_reg}$ threshold of 2. Based on these computations, it is determined that all four regions are "done" and a $C_{total}$ computation is performed using all four useful regions.

In this example, it has been determined that 1/250s exposures are sufficient to meet the requirements of the adaptive exposure control method, and that exposures with a longer exposure time may cause blur and/or overexposure. Additional exposures are captured, using the 1/250s exposure time in order to accumulate a $C_{total}$ which is greater than some predetermined threshold, for example 60. Using a threshold of 60, it can be seen that 6 total exposures at 1/250s would need to be made in order for regions I and II to have a $C_{total}$ value of 60+. In an embodiment of the invention, combining the captured exposures (1 1/500s and 6 1/250s exposures) together, and using registration, motion compensation and/or dynamic range compression algorithms results in a final, target image shown in Fig. 6H.

The present invention has been described using non-limiting detailed descriptions of embodiments thereof that are provided by way of example and are not intended to limit the scope of the invention. It should be understood that features and/or steps described with respect to one embodiment may be used with other embodiments and that not all embodiments of the invention have all of the features and/or steps shown in a particular figure or described with respect to one of the embodiments. Variations of embodiments described will occur to persons of the art. Furthermore, the terms

**EP 1 924 966 B1**

"comprise," "include," "have" and their conjugates, shall mean, when used in the disclosure and/or claims, "including but not necessarily limited to." Furthermore, topic headings have been used to provide organization and clarity to the specification and are not intended to limit the subject matter described therein. In addition, material described in one section may overlap or belong with other sections but are not described more than once for economy.

While the invention has been described with reference to certain preferred embodiments, various modifications will be readily apparent to and may be readily accomplished by persons skilled in the art without departing from the scope of the above teachings. Various embodiments of the invention have been described having specific features. It should be understood that features of the various embodiments may be combined, where appropriate and features which are described above may be omitted, in some preferred embodiments of the invention. Therefore, it is understood that the invention may be practiced other than as specifically described herein without departing from the scope of the following claims:

**Claims**

1. A method for constructing a final image using adaptive exposure control in multiple exposure photography, comprising:

   (a) capturing an exposure;
   (b) analyzing the exposure;
   (c) setting exposure parameters for at least one next exposure adapted to construct the final image based on said analyzing of said exposure, said setting exposure parameters including choosing a minimal exposure time that results in registration variance that is smaller than a predefined threshold;
   (d) capturing the at least one next exposure using the set exposure parameters; and
   (e) constructing a final image utilizing portions of at least the two exposures.

2. A method for constructing a final image according to claim 1 and wherein said setting exposure parameters includes choosing a maximal exposure time for which the signal to noise ratio in a single exposure exceeds a predetermined single exposure threshold.

3. A method for constructing a final image according to claim 1 or claim 2 and wherein said setting exposure parameters includes choosing a maximal total exposure time for which the signal to noise ratio based on an accumulated signal over multiple exposures exceeds a predetermined multiple exposure threshold.

4. A method for constructing a final image according to any of the preceding claims and wherein said registration variance is between at least one other exposure and said exposure.

5. A method according to any of claims 1-4, wherein said analyzing is conducted to determine at least one deficiency including at least one of motion blur, overexposure or underexposure, high dynamic range, low contrast, limited depth of field, limited resolution of at least a portion of an exposure.

6. A method according to claim 5, wherein if the deficiency is motion blur an exposure time of the at least one next exposure is reduced.

7. A method according to claim 6, wherein if the reduced exposure time would result in underexposure, additional exposures are taken.

8. A method according to claim 7, and including combining at least potions that are underexposed of said exposure to produce a properly exposed image.

9. A method according to any of claims 5-8, wherein portions of at least two exposures are combined to produce the final image in which the at least one deficiency is ameliorated.

10. A method according to any of claims 5-9, wherein if the deficiency is overexposure an exposure time of the at least one next exposure is reduced.

11. A method according to any of claims 5-10, and including combining useful portions from one exposure and useful portions from the next exposure to produce the final image having overall proper exposure.

**12.** A method according to any of claims 1-11, further comprising repeating (b)-(d) until a desired final image can be constructed from said exposures.

**13.** A method according to any of claims 1-12, further comprising registering at least the portions of at least the two exposures before constructing the final image.

**14.** A method according to any of claims 1-13, wherein analyzing includes sub-dividing the first exposure into regions, and determining the presence of deficiencies on a region by region basis.

**15.** A method according to claim 14, wherein analyzing comprises, analyzing each region using a measure reflecting at least one of motion blur, overexposure or underexposure, high dynamic range, low contrast, limited depth of field, limited resolution.

**16.** A method according to claim 14 or claim 15, further comprising classifying the exposure time of each region as done, valid, short or long.

**17.** A method according to claim 16, wherein classifying a region as long indicates overexposure.

**18.** A method according to claim 16 or claim 17, wherein classifying a region as short indicates underexposure.

**19.** A method according to any of claims 16-18, wherein classifying a region as valid indicates an acceptable exposure time.

**20.** A method according to any of claims 16-19, wherein classifying a region as done indicates acceptable motion blur and exposure time.

**21.** A method according to any of claims 1-20, wherein a plurality of integration times are set for at least one exposure.

**22.** A method according to any of claims 1-21, wherein setting exposure parameters includes setting at least one of focus, exposure time, aperture, zoom, flash or other lighting source and/or vibration.

**23.** A method according to any of claims 1-19, wherein at least a portion of the analyzing is performed on remote device.

**24.** A multiple exposure photography device, comprising:

an incoming light sensor;
a memory for storing information received from said incoming light sensor; and
a controller including at least functionality for:

(a) capturing an exposure;
(b) analyzing the exposure;
(c) setting exposure parameters for at least one next exposure adapted to construct the final image based on said analyzing of said exposure, said setting exposure parameters including choosing a minimal exposure time that results in registration variance that is smaller than a predefined threshold;
(d) capturing the at least one next exposure using the set exposure parameters; and
(e) constructing a final image utilizing portions of at least the two exposures.


**Patentansprüche**

**1.** Verfahren zum Erstellen eines fertigen Bildes mit adaptiver Belichtungsregelung in der Mehrfachbelichtungsfotografie, das die folgenden Schritte beinhaltet:

a) Belichten einer Aufnahme;
b) Analysieren der Aufnahme;
c) Einstellen von Belichtungsparametern für wenigstens eine nächste Aufnahme, die zum Erstellen des fertigen Bildes geeignet sind, auf der Basis der genannten Analyse der genannten Aufnahme, wobei das genannte Einstellen von Belichtungsparametern das Auswählen einer minimalen Belichtungszeit beinhaltet, die zu einer Registriervarianz führt, die kleiner als ein vordefinierter Schwellenwert ist;

d) Belichten der wenigstens einen nächsten Aufnahme unter Anwendung der eingestellten Belichtungsparameter; und

e) Erstellen eines fertigen Bildes unter Verwendung von Teilen von wenigstens den beiden Aufnahmen.

2. Verfahren zum Erstellen eines fertigen Bildes nach Anspruch 1, wobei das genannte Einstellen von Belichtungsparametern das Auswählen einer maximalen Belichtungszeit beinhaltet, für die das Signal-RauschVerhältnis bei einer einzigen Aufnahme eine vorbestimmte Einzelbelichtungsschwelle übersteigt.

3. Verfahren zum Erstellen eines fertigen Bildes nach Anspruch 1 oder Anspruch 2, wobei das genannte Einstellen von Belichtungsparametern das Auswählen einer maximalen Gesamtbelichtungszeit beinhaltet, für die das Signal-Rausch-Verhältnis auf der Basis eines Summensignals über mehrere Aufnahmen eine vorbestimmte Mehrfachbelichtungsschwelle übersteigt.

4. Verfahren zum Erstellen eines fertigen Bildes nach einem der vorherigen Ansprüche, wobei die genannte Registriervarianz zwischen wenigstens einer anderen Aufnahme und der genannten Aufnahme liegt.

5. Verfahren nach einem der Ansprüche 1 bis 4, wobei die genannte Analyse durchgeführt wird, um wenigstens einen Mangel einschließlich wenigstens einem der Folgenden zu ermitteln: Bewegungsunschärfe, Über- oder Unterbelichtung, hoher dynamischer Bereich, niedriger Kontrast, begrenzte Feldtiefe, begrenzte Auflösung von wenigstens einem Teil einer Aufnahme.

6. Verfahren nach Anspruch 5, wobei, wenn der Mangel Bewegungsunschärfe ist, eine Belichtungszeit der wenigstens einen nächsten Aufnahme reduziert wird.

7. Verfahren nach Anspruch 6, wobei, wenn die reduzierte Belichtungszeit zu einer Unterbelichtung führen würde, zusätzliche Aufnahmen erfolgen.

8. Verfahren nach Anspruch 7, das das Kombinieren von wenigstens Teilen der genannten Aufnahme beinhaltet, die unterbelichtet sind, um ein richtig belichtetes Bild zu erzeugen.

9. Verfahren nach einem der Ansprüche 5 bis 8, wobei Teile von wenigstens zwei Aufnahmen kombiniert werden, um das fertige Bild zu erzeugen, in dem der wenigstens eine Mangel verbessert wird.

10. Verfahren nach einem der Ansprüche 5 bis 9, wobei, wenn der Mangel Überbelichtung ist, eine Belichtungszeit der wenigstens einen nächsten Aufnahme reduziert wird.

11. Verfahren nach einem der Ansprüche 5 bis 10, das das Kombinieren von nützlichen Teilen von einer Aufnahme und nützlichen Teilen von der nächsten Aufnahme beinhaltet, um das fertige Bild mit richtiger Gesamtbelichtung zu erzeugen.

12. Verfahren nach einem der Ansprüche 1 bis 11, das ferner das Wiederholen von b) bis d) beinhaltet, bis ein gewünchtes fertiges Bild von den genannten Aufnahmen erstellt werden kann.

13. Verfahren nach einem der Ansprüche 1 bis 12, das ferner das Registrieren wenigstens der Teile von wenigstens den beiden Aufnahmen vor dem Erstellen des fertigen Bildes beinhaltet.

14. Verfahren nach einem der Ansprüche 1 bis 13, wobei das Analysieren das Unterteilen der ersten Aufnahme in Regionen und das Ermitteln der Anwesenheit von Mängeln Region für Region beinhaltet.

15. Verfahren nach Anspruch 14, wobei das Analysieren das Analysieren jeder Region mit einem Maß beinhaltet, das wenigstens einen Mangel aus Bewegungsunschärfe, Über- oder Unterbelichtung, hoher dynamischer Bereich, niedriger Kontrast, begrenzte Feldtiefe und begrenzte Auflösung reflektiert.

16. Verfahren nach Anspruch 14 oder Anspruch 15, das ferner das Klassifizieren der Belichtungszeit jeder Region als fertig, gültig, kurz oder lang beinhaltet.

17. Verfahren nach Anspruch 16, wobei eine Klassifizierung einer Region als lang eine Überbelichtung anzeigt.

**18.** Verfahren nach Anspruch 16 oder Anspruch 17, wobei eine Klassifizierung einer Region als kurz eine Unterbelichtung anzeigt.

**19.** Verfahren nach einem der Ansprüche 16 bis 18, wobei eine Klassifizierung einer Region als gültig eine akzeptable Belichtungszeit anzeigt.

**20.** Verfahren nach einem der Ansprüche 16 bis 19, wobei eine Klassifizierung einer Region als fertig eine akzeptable Bewegungsunschärfe und Belichtungszeit anzeigt.

**21.** Verfahren nach einem der Ansprüche 1 bis 20, wobei mehrere Integrationszeiten für wenigstens eine Aufnahme eingestellt werden.

**22.** Verfahren nach einem der Ansprüche 1 bis 21, wobei das Einstellen von Belichtungsparametern das Einstellen von Brennpunkt, Belichtungzeit, Blende, Zoom, Blitz oder einer anderen Belichtungsquelle und/oder Vibration beinhaltet.

**23.** Verfahren nach einem der Ansprüche 1 bis 19, wobei wenigstens ein Teil der Analyse auf einem ortsfernen Gerät erfolgt.

**24.** Mehrfachbelichtungsfotografiegerät, das Folgendes umfasst:

einen Eingangslichtsensor;
einen Speicher zum Speichern von von dem genannten Eingangslichtsensor empfangenen Informationen; und
eine Steuerung zumindest mit Funktionalität zum:

a) Belichten einer Aufnahme;
b) Analysieren der Aufnahme;
c) Einstellen von Belichtungsparametern für wenigstens eine nächste Aufnahme, um das fertige Bild auf der Basis der genannten Analyse der genannten Aufnahme zu erstellen, wobei das genannte Einstellen von Belichtungsparametern das Auswählen einer minimalen Belichtungszeit beinhaltet, die zu einer Registriervarianz führt, die geringer ist als eine vordefinierte Schwelle;
d) Belichten der wenigstens einen nächsten Aufnahme unter Anwendung der eingestellten Belichtungsparameter; und
e) Erstellen eines fertigen Bildes unter Verwendung von Teilen von wenigstens den beiden Aufnahmen.

**Revendications**

**1.** Procédé servant à élaborer une image finale à l'aide d'une commande d'exposition adaptative dans la photographie à expositions multiples, comprenant :

(a) la saisie d'une pose ;
(b) l'analyse de la pose ;
(c) le réglage des paramètres de pose pour au moins une pose suivante adaptée pour élaborer l'image finale sur la base de ladite analyse de ladite pose, ledit réglage des paramètres de pose englobant la sélection d'un temps de pose minimum qui aboutit à une variance de recalage qui est inférieure à un seuil prédéfini ;
(d) la saisie de ladite au moins une pose suivante au moyen des paramètres de pose ayant été réglés ; et
(e) l'élaboration d'une image finale suite à l'utilisation de portions des deux poses au moins.

**2.** Procédé servant à élaborer une image finale selon la revendication 1, et ledit réglage des paramètres de pose englobant la sélection d'un temps de pose maximum pour lequel le rapport signal/bruit d'une pose individuelle dépasse un seuil prédéterminé de pose individuelle.

**3.** Procédé servant à élaborer une image finale selon la revendication 1 ou la revendication 2, et ledit réglage des paramètres de pose englobant la sélection d'un temps de pose maximum total pour lequel le rapport signal/bruit, fondé sur un signal cumulé sur des poses multiples, dépasse un seuil prédéterminé de poses multiples.

**4.** Procédé servant à élaborer une image finale selon l'une quelconque des revendications précédente, et ladite variance de recalage se faisant entre au moins une autre pose et ladite pose.

**5.** Procédé selon l'une quelconque des revendications 1 à 4, ladite analyse étant effectuée pour déterminer au moins une imperfection comportant au moins l'un des éléments suivants, à savoir flou de mouvement, surexposition ou sous-exposition, gamme dynamique élevée, faible contraste, profondeur de champ limitée, résolution limitée d'au moins une portion d'une pose.

**6.** Procédé selon la revendication 5, un temps de pose de ladite au moins une pose suivante étant réduit si l'imperfection est le flou de mouvement.

**7.** Procédé selon la revendication 6, des poses supplémentaires étant prises au cas où le temps de pose réduit aboutirait à un effet de sous-exposition.

**8.** Procédé selon la revendication 7, et incluant l'action consistant à combiner au moins des portions qui sont en sous-exposition de ladite pose afin de produire une image à exposition adéquate.

**9.** Procédé selon l'une quelconque des revendications 5 à 8, des portions d'au moins deux poses étant combinées afin de produire l'image finale dans laquelle ladite au moins une imperfection est améliorée.

**10.** Procédé selon l'une quelconque des revendications 5 à 9, un temps de pose de ladite au moins une pose suivante étant réduit si l'imperfection est un effet de surexposition.

**11.** Procédé selon l'une quelconque des revendications 5 à 10, et incluant la combinaison de portions utiles provenant d'une pose et de portions utiles provenant de la pose suivante afin de produire l'image finale ayant une pose globale adéquate.

**12.** Procédé selon l'une quelconque des revendications 1 à 11, comprenant en outre la répétition des étapes (b) à (d) jusqu'à ce qu'il soit possible d'élaborer une image finale désirée à partir desdites poses.

**13.** Procédé selon l'une quelconque des revendications 1 à 12, comprenant en outre le recalage au moins des portions desdites au moins deux poses avant d'élaborer l'image finale.

**14.** Procédé selon l'une quelconque des revendications 1 à 13, l'analyse englobant la subdivision de la première pose en zones, et l'action consistant à déterminer la présence d'imperfections sur une base "zone par zone".

**15.** Procédé selon la revendication 14, l'opération d'analyse comprenant l'analyse de chaque zone à l'aide d'une mesure qui reflète au moins l'un des éléments suivants, à savoir flou de mouvement, surexposition ou sous-exposition, gamme dynamique élevée, faible contraste, profondeur de champ limitée, résolution limitée.

**16.** Procédé selon la revendication 14 ou la revendication 15, comprenant en outre l'opération consistant à classer le temps de pose de chaque zone comme étant exécuté, valide, court ou long.

**17.** Procédé selon la revendication 16, la classification d'une zone comme longue indiquant une surexposition.

**18.** Procédé selon la revendication 16 ou la revendication 17, la classification d'une zone comme courte indiquant une sous-exposition.

**19.** Procédé selon l'une quelconque des revendications 16 à 18, la classification d'une zone comme valide indiquant un temps de pose acceptable.

**20.** Procédé selon l'une quelconque des revendications 16 à 19, la classification d'une zone comme exécutée indiquant un temps de pose et un flou de mouvement acceptables.

**21.** Procédé selon l'une quelconque des revendications 1 à 20, une pluralité de durées d'intégration étant réglée pour au moins une pose.

**22.** Procédé selon l'une quelconque des revendications 1 à 21, le réglage des paramètres de pose englobant au moins l'un des éléments suivants, à savoir distance focale, temps de pose, ouverture de diaphragme, zoom, flash ou autre source lumineuse et/ou vibration.

23. Procédé selon l'une quelconque des revendications 1 à 19, une partie au moins de l'analyse étant effectuée sur un dispositif distant.

24. Dispositif de photographie à expositions multiples, comprenant:

un capteur de lumière arrivante;
une mémoire pour stocker les informations reçues à partir dudit capteur de lumière arrivante; et
un contrôleur contenant au moins une fonctionnalité pour:

(a) la saisie d'une pose ;
(b) l'analyse de la pose ;
(c) le réglage des paramètres de pose pour au moins une pose suivante adaptée pour élaborer l'image finale sur la base de ladite analyse de ladite pose, ledit réglage des paramètres de pose englobant la sélection d'un temps de pose minimum qui aboutit à une variance de recalage qui est inférieure à un seuil prédéfini ;
(d) la saisie de ladite au moins une pose suivante au moyen des paramètres de pose ayant été réglés ; et
(e) l'élaboration d'une image finale suite à l'utilisation de portions des deux poses au moins.

*100*

```
           ┌──────────────────────┐
     ┌────►│  CAPTURE  EXPOSURE    │───102
     │     └──────────────────────┘
     │                │
     │                ▼
     │     ┌──────────────────────┐
     │     │  ANALYZE  EXPOSURE    │───104
     │     └──────────────────────┘
     │                │
     │                ▼
     │     ┌──────────────────────┐
     └─────│   SET  EXPOSURE       │───106
           │   PARAMETERS          │
           └──────────────────────┘
                      │
                      ▼
           ┌──────────────────────┐
           │   CONSTRUCT           │───108
           │   FINAL  IMAGE        │
           └──────────────────────┘
```

FIG.1A

*120*

```
┌─────────────────────────┐
│   SET  PRE−ACQUISITION   │ ─╮
│       PARAMETERS         │  ⟩ 122
└─────────────────────────┘
            │
            ▼
┌─────────────────────────┐
│  INITIATE   ACQUISITION  │ ─╮ 124
└─────────────────────────┘
            │
            ▼
┌─────────────────────────┐
│    DATA  ACQUISITION     │ ─╮ 126
│        (FIG.3)           │
└─────────────────────────┘
            │
            ▼
┌─────────────────────────┐
│    POST−ACQUISITION      │ ─╮ 128
│       PROCESSING         │
└─────────────────────────┘
```

FIG.1B

FULL PATCHES

FIG.2A

SAMPLED PATCHES

FIG.2B

300 —↘

$i = 1$ —302

$t0 = \text{CURRENT TIME}$ —304

FOR EVERY REGION r IN THE IMAGE SET $C_{total}(i,r)=0$ —324

CHOOSE INITIAL EXPOSURE PARAMETERS —306

TAKE EXPOSURE —308

FOR EVERY REGION r IN THE IMAGE DO: —310

$i = i + 1$ —320

COMPUTE STATUS $(i,r)$ (FIG.4) —312

COMPUTE NEXT EXPOSURE PARAMETERS —318

MORE REGIONS ? —314
YES
NO

$(\text{CURRENT\_TIME} - t0 < \text{MAX\_}\Delta t)$ AND $(i < \text{MAX\_EXPOSURES})$ AND NOT ALL REGIONS ARE DONE ? —316
YES
NO

RETURN TO MAIN FLOWCHART —322

FIG.3

FIG.4

FIG.5

TRUE PATTERN

FIG.6A

SCENE PROPERTIES:

▨ = VERTICAL MOTION

▱ = LOW DYNAMIC RANGE

FIG.6B

1/4 sec

1/30 sec

1/60 sec

1/250 sec

FIG.6C
(PRIOR ART)

FIG.6D

$C_{reg}$:

| | |
|---|---|
| 4.0 | 4.5 |
| 0.36 | 0.4 |

$C_{over}$:

| | |
|---|---|
| 0 | 0 |
| 0 | 0 |

$C_{SNR}$:

| | |
|---|---|
| 6.7 | 6.8 |
| 15.2 | 15.1 |

$C_{total}$:

| | |
|---|---|
| 0 | 0 |
| 15.2 | 15.1 |

FIG.6E

FIG.6F

$C_{reg}$ :

| 1.01 | 1.48 |
|------|------|
| 0.09 | 0.13 |

$C_{over}$ :

| 0 | 0 |
|---|---|
| 0 | 0 |

$C_{SNR}$ :

| 10.4 | 10.2 |
|------|------|
| 27.4 | 26.5 |

$C_{total}$ :

| 10.4 | 10.2 |
|------|------|
| 42.6 | 41.6 |

FIG.6G

FIG.6H

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1507234 A
- JP 2004242362 B
- US 2002154242 A
- CA 2316451
- EP 1418544 A

**Non-patent literature cited in the description**

- **M. IRANI ; S. PELEG.** Improving Resolution by Image Registration. *CVGIP:GMIP,* May 1991, vol. 53, 231-239
- **P. E. DEBEVEC ; J. MALIK.** Recovering High Dynamic Range Radiance Maps from Photographs. *SIGGRAPH 97,* August 1997
- **T.Q. PHAM ; M. BEZUIJEN ; L.J. VAN VLIET ; K. SCHUTTE ; C.L. LUENGO HENDRIKS.** Performance of optimal registration estimators, and appearing. *Proc. SPIE,* 2005, vol. 5817, 133-144
- **T.Q. PHAM ; L.J. VAN VLIET ; K. SCHUTTE.** Influence of signal-to-noise ratio and point spread function on limits of super-resolution. *Proc. SPIE,* 2005, vol. 5672, 169-180
- **S. BAKER ; I. MATTHEWS.** Lucas-Kanade 20 Years On:A Unifying Framework. *International Journal of Computer Vision,* March 2004, vol. 56 (3), 221-255
- **J. SHI ; C. TOMASI.** *Good Features to Track,* 1994
- **M.D. ROBINSON ; P. MILANFAR.** Fundamental Performance Limits in Image Registration. *IEEE Trans. Image Processing,* 2004, vol. 13 (9), 1185-1199